(19) Europäisches Patentamt
European Patent Office
Office européen des brevets

(11) EP 3 950 862 B1

(12) **EUROPEAN PATENT SPECIFICATION**

(45) Date of publication and mention of the grant of the patent:
**06.05.2026 Bulletin 2026/19**

(21) Application number: **20776920.9**

(22) Date of filing: **27.03.2020**

(51) International Patent Classification (IPC):
***C09D 175/04*** *(2006.01)* ***C09D 183/06*** *(2006.01)*
***C08G 18/10*** *(2006.01)* ***C08G 18/24*** *(2006.01)*
***C08G 18/48*** *(2006.01)* ***C08G 18/61*** *(2006.01)*
***C08G 18/75*** *(2006.01)* ***C08G 71/04*** *(2006.01)*
***C08G 77/388*** *(2006.01)* ***C08G 77/458*** *(2006.01)*
***C08K 5/12*** *(2006.01)* ***C08K 5/1565*** *(2006.01)*
***C09D 183/10*** *(2006.01)* ***C08G 77/14*** *(2006.01)*
***C08G 77/38*** *(2006.01)* ***C08K 5/205*** *(2006.01)*
***C08K 5/29*** *(2006.01)* ***C09D 183/08*** *(2006.01)*

(52) Cooperative Patent Classification (CPC):
(C-Sets available)
**C08G 18/755; C08G 18/10; C08G 18/246; C08G 18/4854; C08G 18/61; C08G 71/04; C08G 77/14; C08G 77/38; C08G 77/388; C08G 77/458; C08K 5/12; C08K 5/1565; C08K 5/205; C08K 5/29; C09D 183/06;** (Cont.)

(86) International application number:
**PCT/JP2020/014080**

(87) International publication number:
**WO 2020/196845 (01.10.2020 Gazette 2020/40)**

(54) **COATING COMPOSITION AND COATING FILM**

BESCHICHTUNGSZUSAMMENSETZUNG UND BESCHICHTUNGSFILM

COMPOSITION DE REVÊTEMENT ET FILM DE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2019 JP 2019063496**

(43) Date of publication of application:
**09.02.2022 Bulletin 2022/06**

(73) Proprietor: **DAINICHISEIKA COLOR & CHEMICALS MFG. CO., LTD.**
**Chuo-ku**
**Tokyo 103-8383 (JP)**

(72) Inventors:
- **TAKAHASHI, Kenichi**
**Tokyo 103-8383 (JP)**
- **ASAI, Akiko**
**Tokyo 103-8383 (JP)**
- **KIMURA, Kazuya**
**Tokyo 103-8383 (JP)**
- **MUTO, Kazuaki**
**Tokyo 103-8383 (JP)**
- **TANIGAWA, Masashi**
**Tokyo 103-8383 (JP)**

(74) Representative: **Wächtershäuser & Hartz Patentanwaltspartnerschaft mbB**
**Weinstraße 8**
**80333 München (DE)**

(56) References cited:
**WO-A1-2015/046049**
**WO-A1-2016/185172**
**JP-A- 2003 084 102**
**JP-A- 2011 131 588**
**JP-A- 2011 132 208**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**C09D 183/08; C09D 183/10**

C-Sets
**C08G 18/10, C08G 18/284;**
**C08G 18/10, C08G 18/73;**
**C08G 18/10, C08G 18/7831;**
**C08G 18/10, C08G 18/8009;**
**C08K 5/12, C08L 83/06;**
**C08K 5/1565, C08L 83/06;**
**C08K 5/205, C08L 83/06;**
**C08K 5/29, C08L 83/10;**
**C09D 183/10, C08K 5/29**

## Description

### Technical Field

The present invention relates to a paint composition containing a polysiloxane-modified polyhydroxyurethane resin as an essential component, and a paint film formed from the composition, and in more detail, relates to a paint composition capable of forming a paint film excellent in self-repairability. The present invention relates to a technique that can provide a self-repairable paint that can be more excellent in terms of countermeasure for environmental problems as compared to existing materials which have been used as a self-repairable paint.

### Background Art

In the past, coating with a paint in which a resin component is contained is applied on a surface of a substrate, such as a plastic, paper, a metal, a fiber, glass, and wood, for the purpose of protecting the substrate from a scratch due to friction, denaturation due to heat, contamination due to adhesion of dusts and water, and the like, and maintaining beauty and design. Plastic substrates, such as an ABS resin and polycarbonate, have been used for various industrial products, such as electronic devices and automobile parts, especially for the purpose of reducing weight. Products need to be protected from a large number of scratches and contamination, which occur incidentally on the surfaces of the products during transportation and assembly of the products, especially during the use thereof, and therefore coating the surface of a plastic substrate is important. In coating materials at the time when the coating is applied, adhesiveness to various substrates, resistance to a scratch, resistance to contamination due to chemicals or the like, and so on are required according to the purpose of applying the coating.

Among others, in the coating that is based on a dark color, such as black and dark blue, and has glossy feeling, a small scratch or slight dirt which occurred on a paint film is likely to be conspicuous to be a cause for impairing the beauty in terms of appearance, and therefore resistance to a scratch and dirt is particularly required. Examples of the means for making it difficult for the scratch or dirt on the paint film to occur includes a method of applying hard coat on a plastic substrate with an ultraviolet ray-curable resin or the like. For example, Patent Literature 1 discloses a paint composition capable of forming a paint film that exhibits excellent scratch resistance, hardness, appearance, adhesiveness, and resistance to a composition containing an ultraviolet ray absorber or the like to a plastic substrate in a one-coat-one-bake coating process. However, there is a problem that the paint film, when scratched strongly with a metal brush or the like, is broken, and scratch traces are left.

As a method for solving such a problem, a paint composition capable of forming a self-repairable paint film, on which a scratch that has occurred disappears in a short time, on surfaces of various substrates has been proposed in recent years. For example, a polyurethane paint composition that uses a particular polyol, contains, as a basic composition, an allophanate-modified isocyanate compound substantially free of an isocyanurate group, and is capable of forming a paint film that is flexible and excellent in toughness has been proposed in Patent Literature 2.

On the other hand, as a novel polyurethane-based material, development of a polyhydroxyurethane resin that is a polyurethane-based material having a hydroxy group in the chemical structure has progressed in recent years (see, for example, Patent Literature 3). The polyhydroxyurethane resin has a hydroxy group in the main chain thereof, thus can easily form a thermosetting film by crosslinking reaction, further, can be produced using carbon dioxide as a raw material, and therefore has also been attracting attention as an environmentally compatible resin. In addition, the polyhydroxyurethane resin has a strong tendency to have characteristics of being hard and brittle, and therefore utilization in special applications, such as barrier coating, where a conventional polyurethane resin cannot be used has been devised (see Patent Literature 4). Patent literature 5 relates to a thermoplastic polyolefin resin skin material having a thermoplastic polyolefin resin sheet, and either of a top coat layer directly formed on the sheet or a top coat layer formed through a primer layer formed on the sheet, and the top coat layer mainly consists of a five-membered ring annular carbonate polysiloxane compound and a polysiloxane-modified polyhydroxy polyurethane resin derived from a reaction with an amine compound. Patent literature 6 relates to a five-membered cyclocarbonate polysiloxane compound, which is produced by reacting an epoxy-modified polysiloxane compound and carbon dioxide

### Citation List

#### Patent Literature

Patent Literature 1: Japanese Patent No.5692481
Patent Literature 2: Japanese Patent No. 4707013

Patent Literature 3: Japanese Patent Laid-Open No. 2006-9001
Patent Literature 4: Japanese Patent No. 5604329
Patent literature 5: JP 2011 131588 A
Patent literature 6: JP 2011 132208 A

## Summary of Invention

### Technical Problem

However, the polyurethane paint composition that is proposed in previously described Patent Literature 2 and is a reaction product of a polyol and a polyisocyanate exhibits satisfactory adhesiveness to various substrates, does not give a crack and a facture in a paint film, and exhibits satisfactory resistance to a scratch, but each composition has a low molecular weight, and therefore sufficient strength is not obtained unless crosslinking reaction is performed sufficiently, and in addition, even if sufficient strength is obtained, there is a problem that as a decorative film, the degree of elongation is insufficient to various types of processing.

On the other hand, the polyhydroxyurethane resin proposed in Patent Literature 3 has a strong tendency to have characteristics of being hard and brittle as described previously, and therefore only utilization in special applications, such as barrier coating, where a conventional polyurethane resin cannot be used is considered. As a matter of course, application of the polyhydroxyurethane resin to the previously described problem that a paint film, when scratched strongly with a metal brush or the like, is broken, and a scratch trace is left is not considered at all. Further, according to studies conducted by the present inventors, when the polyhydroxyurethane resin is used as a material for forming a paint film, there is a problem that the paint film is inferior in surface sliding properties. If the surface sliding properties can be improved, tackiness prevention during winding can be realized when the polyhydroxyurethane resin is used as, for example, a film, and further, an effect by which properties of wiping out dirt or the like can be improved is obtained.

Accordingly, an object of the present invention is to provide a paint composition that utilizes a polyhydroxyurethane resin which attracts attention also as an environmentally compatible resin, the paint composition capable of forming tough, self-repairable paint film being such that the paint film is unlikely to be broken even when the paint film is scratched with strong force using a metal brush, a metal fiber or the like, and a scratch which has occurred disappears with the lapse of time. In addition, an object of the present invention is to provide a paint composition that utilizes a polyhydroxyurethane resin being such that a formed paint film also has solvent resistance, and further, having high breaking elongation by which a complicated shape can be formed during shaping a substrate. Further, in addition to those described above, an object of the present invention is to provide an excellent paint composition capable of effectively suppressing occurrence itself of a scratch on a paint film formed on the surface of a substrate and, with respect to a scratch which has occurred, capable of allowing the scratch to disappear with the lapse of time. Furthermore, an object of the present invention is to provide a paint composition enabling formation of a useful paint film excellent in surface sliding properties even though the paint film utilizes a polyhydroxyurethane resin.

### Solution to Problem

The objects are achieved by the present invention below. That is the present invention provides:

[1] A paint composition that forms a self-repairable, polysiloxane-modified polyhydroxyurethane-crosslinked, coating film, the paint composition comprising: a polysiloxane-modified polyhydroxyurethane resin; and as a curing agent, a polyisocyanate compound comprising two or more isocyanate groups in a molecule, wherein the polysiloxane-modified polyhydroxyurethane resin has repeating units represented by the following formula (1), wherein a crosslinked coating film formed with the polysiloxane-modified polyhydroxyurethane resin has a 20% modulus at 25°C of 10 MPa or less:

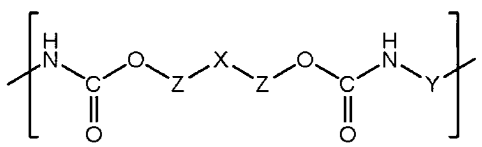

Formula (1)

wherein X represents a direct bond, or a C1-30 aliphatic hydrocarbon group, a C4-40 alicyclic hydrocarbon group, a C6-40 aromatic hydrocarbon group, or a Si1-300 dimethyl siloxane group, and these groups optionally have, in a structure thereof, any bond selected from the group consisting of an ether bond, an amino bond, a sulfonyl bond, an ester bond, and a urethane bond, or a hydroxy group, a halogen atom, or a polyalkylene glycol chain having a

number of repeating units of 1 to 30 and containing C2-6 alkylene; Y represents a C1-15 aliphatic hydrocarbon group, a C4-15 alicyclic hydrocarbon group, or a C6-15 aromatic hydrocarbon group, and these groups optionally have, in a structure thereof, an ether bond or a sulfonyl bond, or a hydroxy group or a halogen atom; and each of Z independently represents at least any one of structures selected from the group consisting of the following formulas (2) to (5), and two or more structures selected from the group consisting of these formulas (2) to (5) are optionally mixed in the repeating units and between the repeating units:

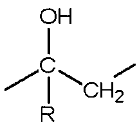
Formula (2)
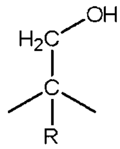
Formula (3)

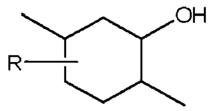
Formula (4)
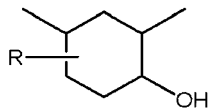
Formula (5)

wherein R represents a hydrogen atom or a methyl group; and, irrespective of whatever formula is selected, an uncombined bond on the right side forms a chemical bond with an oxygen atom, and an uncombined bond on the left side forms a chemical bond with X or forms a chemical bond with an uncombined bond on the left side of the other Z when X is a direct bond, provided that the polysiloxane-modified polyhydroxyurethane resin has at least a repeating unit of formula (1) wherein X represents a Si1-300 dimethyl siloxane group.

Preferred embodiments of the paint composition of the present invention include the followings.

[2] The paint composition according to [1], wherein the polysiloxane-modified polyhydroxyurethane resin is a synthetic of a polysiloxane compound having at least two cyclic carbonate groups, the polysiloxane compound represented by the following formula (6), and a component comprising a diamine:

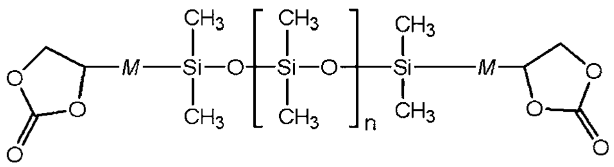
Formula (6)

wherein M represents a C1-30 aliphatic hydrocarbon group, a C4-40 alicyclic hydrocarbon group, or a C6-40 aromatic hydrocarbon group, and these groups optionally have, in a structure thereof, any bond selected from the group consisting of an ether bond, an amino bond, a sulfonyl bond, an ester bond, and a urethane bond, or a hydroxy group, a halogen atom, or a polyalkylene glycol chain having a number of repeating units of 1 to 30 and containing C2-6 alkylene; and n represents a number of 1 to 300.

[3] The paint composition according to [1] or [2], wherein the polysiloxane-modified polyhydroxyurethane resin has a polysiloxane content of 0.1 to 10.0% on a mass basis.

[4] The paint composition according to any one of [1] to [3], wherein part or the whole of a urethane bond contained in the polysiloxane-modified polyhydroxyurethane resin is an addition reaction product of a five-membered cyclic carbonate group, being a reaction product of an epoxy group and carbon dioxide, and an amino group, and a ratio of an -O-CO- structure in the addition reaction product, derived from the carbon dioxide, in the polysiloxane-modified polyhydroxyurethane resin is 1 to 20% by mass.

[5] The paint composition according to any one of [1] to [4], wherein the repeating units represented by the formula (1) comprise a unit such that X represents a chemical structure represented by the following formula (7):

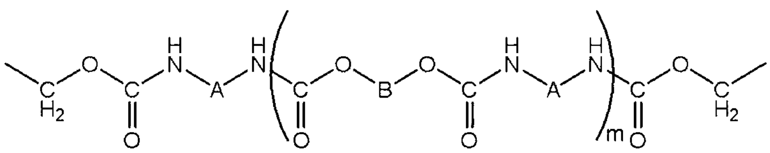
Formula (7)

wherein A represents a chemical structure derived from a polyisocyanate; B represents a chemical formula derived from a polyol; and m represents any one of 1 to 6.

[6] The paint composition according to any one of [1] to [5], wherein the polysiloxane-modified polyhydroxyurethane resin has a 20% modulus at 25°C of 0.3 to 9.5 MPa.

[7] The paint composition according to any one of [1] to [6], wherein the polyisocyanate compound has an NCO content of 3 to 35% in terms of a solid content.

[8] The paint composition according to any one of [1] to [7], wherein a ratio (NCO/OH) of a number of moles of an isocyanate group (NCO) of the polyisocyanate compound to a number of moles of a hydroxy group (OH) of the polysiloxane-modified polyhydroxyurethane resin is 0.2 to 1.1.

[9] The paint composition according to any one of [1] to [8], further comprising a urethane-curing catalyst.

[10] A paint film obtained by curing the paint composition according to any one of [1] to [9] having been applied.

## Advantageous Effects of Invention

According to the present invention, a paint composition containing a polysiloxane-modified polyhydroxy urethane resin and a curing agent enables formation of a self-repairable paint film on the surfaces of various substrates, disappearance of a scratch having occurred on the surfaces with the lapse of time, and, in addition, imparting resistance against organic solvents to a paint film. Further, according to the present invention, another effect such that the surface of the paint film formed on the surface of the substrate has sliding properties, resulting in suppression of occurrence itself of a scratch is obtained by using the paint composition of the present invention. According to the present invention, a paint composition that enables formation of a more useful paint film that is more excellent in surface sliding properties is provided by applying a polyhydroxyurethane resin particularly having a polysiloxane chain as a main chain as compared to the case where the polyhydroxyurethane resin does not have a polysiloxane chain. In addition, the paint film formed with the paint composition of the present invention is not only excellent in adhesiveness to various substrates but also excellent in hardness, curability, degree of elongation, and blocking resistance. Therefore, the paint composition of the present invention is applicable to not only plastic substrates but also coating on decorative films, such as coating on metal materials, in-mold molding in which followability to complicated shapes is required, film insert molding, and vacuum pressure forming. In the present invention, a polysiloxane-modified polyhydroxyurethane resin that is useful as an essential component of the paint composition, the polysiloxane-modified polyhydroxyurethane resin having a particular structure, has been developed, but further, carbon dioxide can be utilized as a raw material for producing the polysiloxane-modified polyhydroxyurethane resin that is an essential component of the paint film, and therefore the present invention enables providing products that can also contribute to resource saving and environmental protection.

## Description of Embodiments

Next, the present invention will be described in more detail giving preferred embodiments for conducting the present invention.

The paint composition of the present invention is a paint composition capable of forming a self-repairable paint film, and is characterized by containing, as an essential component, a polysiloxane-modified polyhydroxyurethane resin that has a structure having repeating units represented by the formula (1), and containing, in the repeating units, at least a unit such that X in the formula (1) represents a Si1-300 dimethyl siloxane group, and as a curing agent, a polyisocyanate compound having two or more isocyanate groups in a molecule, wherein a crosslinked paint film formed with the polysiloxane-modified polyhydroxyurethane resin has a 20% modulus at 25°C of 10 MPa or less.

The polysiloxane-modified polyhydroxyurethane resin (hereinafter, sometimes also simply referred to as polyhydroxyurethane resin) that characterizes the present invention is of a structure having at least a chemical structure represented by the previously described formula (1) as repeating units, and containing, in the repeating units, at least a unit such that X in the formula (1) represents a Si1-300 dimethyl siloxane group. For example, when a compound having at least two five-membered cyclic carbonate groups in one molecule (hereinafter, sometimes simply referred to as "cyclic carbonate") and a compound having at least two amino groups in one molecule are used as monomer units, the resin can be obtained as a polyaddition reaction product between these compounds. In the polyaddition reaction between a cyclic carbonate that forms a polymer chain and an amino group, two types of products of different structures are obtained because the cyclic carbonate cleaves two ways as shown below.

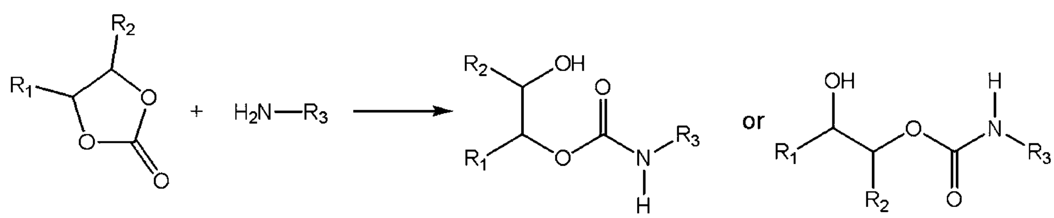

Accordingly, the polyhydroxyurethane resin obtained by the polyaddition reaction, which is the above-described model reaction, between multifunctional monomers has a structure in which any of the following formulas (2) to (5) is contained in such a way as to be mixed randomly as the structure of the Z part in the following formula (1). Note that as shown in formulas (4) and (5), the alicyclic hydrocarbon group and the aromatic hydrocarbon group, which the structure of the X part in formula (1) can have, also includes a group to which an aliphatic hydrocarbon group is bonded.

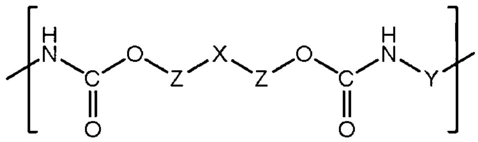

Formula (1)

wherein X represents a direct bond, or a C1-30 aliphatic hydrocarbon group, a C4-40 alicyclic hydrocarbon group, a C6-40 aromatic hydrocarbon group, or a Si1-300 dimethyl siloxane group, and these groups optionally have, in a structure thereof, any bond selected from the group consisting of an ether bond, an amino bond, a sulfonyl bond, an ester bond, and a urethane bond, or a hydroxy group, a halogen atom, or a polyalkylene glycol chain having a number of repeating units of 1 to 30 and containing C2-6 alkylene; Y represents a C1-15 aliphatic hydrocarbon group, a C4-15 alicyclic hydrocarbon group, or a C6-15 aromatic hydrocarbon group, and these groups optionally have, in a structure thereof, an ether bond or a sulfonyl bond, or a hydroxy group or a halogen atom; and each of Z independently represents at least any one of structures selected from the group consisting of the following formulas (2) to (5), and two or more structures selected from the group consisting of these formulas (2) to (5) are optionally mixed in the repeating units and between the repeating units.

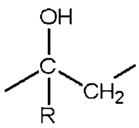

Formula (2)

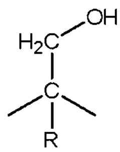

Formula (3)

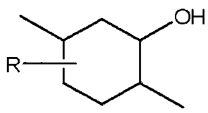

Formula (4)

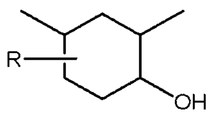

Formula (5)

wherein R represents a hydrogen atom or a methyl group; and, irrespective of whatever formula is selected, an uncombined bond on the right side forms a chemical bond with oxygen, and an uncombined bond on the left side forms a chemical bond with X or forms a chemical bond with an uncombined bond on the left side of the other Z when X is a direct bond.

As just described above, the polyhydroxyurethane resin that forms the present invention has a chemical structure having a polysiloxane chain, a urethane bond, and a hydroxy group in the main chain. On the other hand, a urethane bond is obtained from an isocyanate compound and a polyol compound in methods for producing a polyurethane resin, which have industrially and widely been utilized in the past, and therefore it is impossible to obtain a structural skeleton having a hydroxy group in the main chain. For this reason, it can be said that the polyhydroxy urethane resin having the above-described structure is a polyurethane resin having another structure that is distinguished clearly from conventional polyurethane resins.

The existence of the hydroxy group in the polyhydroxyurethane resin is a particularly crucial point in the present invention, and by crosslinking this hydroxy group with a particular isocyanate which is used as a curing agent, a crosslinked product (cured film) can easily be obtained. This crosslinked product improves the solvent resistance and the elasticity and also contributes to an improvement in the adhesiveness with the substrate. The polyhydroxy urethane resin having the above-described particular structure preferably has a weight average molecular weight (Mw) of 10000 to 100000 in terms of strength and processability of the final paint film (cured film) formed with the paint composition containing the resin.

In addition, the present invention intends to find out a paint film excellent in self-repairability to a scratch and a paint composition for the paint film, and therefore the polysiloxane-modified polyhydroxyurethane resin that forms the present invention needs to have mechanical properties within a suitable range. Specifically, the polyhydroxyurethane resin that is used in the present invention needs to be such that a crosslinked paint film formed with the resin has a 20% modulus at 25°C of 10 MPa or less. Further, more preferably, the present invention uses a polyhydroxyurethane resin that enables providing a paint film having a stress of 8 MPa or less, and further, 5 MPa or less at the time of 20% elongation described above. According to studies conducted by the present inventors, when the crosslinked paint film formed with the above-described resin has a stress at the time of 20% elongation at 25°C of larger than 10 MPa, stress acts against the force that is applied when a scratch is made, and therefore the paint film does not deform, so that the paint film is broken by

force of a certain level or higher, and a scratch that cannot be repaired thereby occurs. In addition, even if the paint film can deform, much time and energy (such as heat) are needed until the shape of the paint film returns to the original shape, and therefore the paint film is inferior in the self-repairability.

Further, it is essential that the polyhydroxyurethane resin that forms the present invention contain a polysiloxane chain as a synthetic component of the resin, and therefore a paint film formed with the paint composition containing such a resin has a surface on which sliding properties are exhibited, and the effects described below are obtained. That is, by using the polyhydroxyurethane resin having a structure in which polysiloxane is copolymerized, the paint film formed with the paint composition of the present invention can reduce the stress that causes a scratch to occur by making small the frictional resistance to a material body that gives a scratch to the paint film, and as a result, the performance by which a scratch is unlikely to occur is exhibited effectively. For this reason, according to the present invention, a novel effect such that the number of scratches that occurs to the formed paint film can be suppressed is obtained. That is, the object of the present invention such that even when a scratch or the like occurs to a paint film, the paint film in a beautiful state is retained by providing a paint composition that enables formation of a self-repairable paint film has been achieved more effectively in the present invention by adopting the constitution of the paint composition using a polysiloxane-modified polyhydroxyurethane resin to make it possible to reduce the occurrence itself of a scratch to the paint film. In addition, according to studies conducted by the present inventors, when the polyhydroxyurethane resin that forms the present invention has a polysiloxane chain as the main chain of the resin, thereby the paint composition of the present invention makes the surface sliding properties of the formed paint film more excellent as compared to the case where a polyhydroxyurethane resin not having a polysiloxane chain is used. Therefore, an effect that cannot be realized with the polyhydroxyurethane resin not having a polysiloxane chain, the effect being such that occurrence of tackiness during winding can be prevented, and properties of wiping out dirt or the like is improved, is obtained when the paint composition is used for a film.

The polydimethylsiloxane content in the polyhydroxyurethane resin that characterizes the present invention is preferably set to 0.1 to 10.0%, more preferably 0.1 to 5.0%, and still more preferably 0.5 to 5.0% on a mass basis. When the content of the polydimethylsiloxane group is less than 0.1%, the above-described effect on the sliding properties of the paint film is deteriorated in some cases. On the other hand, even if the content is made larger than 10%, the effect on the sliding properties is hardly changed to bring about economical demerits.

The paint composition of the present invention contains a particular resin described above and, as a curing agent, a polyisocyanate compound containing two or more isocyanate groups in a molecule. Hereinafter, the polyisocyanate compound that forms the present invention will be described. The polyisocyanate compound (polyisocyanate curing agent) that forms the paint composition of the present invention preferably has an isocyanate content by percentage of 3 to 35% in terms of a solid content. The polyisocyanate compound more preferably has an isocyanate content by percentage of 5 to 25%, and still more preferably 7 to 14%. According to studies conducted by the present inventors, a polyisocyanate compound having an isocyanate content by percentage of larger than 35% has a small molecular weight, and therefore the distance between crosslinking points is made short, thereby making it difficult to deform a paint film, which makes the paint film inferior in scratch-repairability. Further, the polyisocyanate compound having an isocyanate content by percentage of larger than 35% is not preferable because it has high volatility and evaporates by heating during curing a paint, which gives an influence on the safety and the environment. In addition, when the isocyanate content by percentage is smaller than 3%, the amount of the isocyanate compound to be used is made large, which lowers the reactivity.

The polyisocyanate compound that is used in the present invention is not particularly limited, and for example, a known polyisocyanate compound which has been used in the past can be used. Examples of the polyisocyanate compound that is used in the present invention include a dimer of 2,4-toluylene diisocyanate, triphenylmethane triisocyanate, tris-(p-isocyanatephenyl)thiophosphite, a multifunctional aromatic isocyanate, a multifunctional aromatic aliphatic isocyanate, a multifunctional aliphatic isocyanate, a fatty acid-modified multifunctional aliphatic isocyanate, a block type polyisocyanate such as a blocked multifunctional aliphatic isocyanate, and a polyisocyanate prepolymer. Among these, any of aromatic and aliphatic polyisocyanate compounds can be used. Among the aromatic polyisocyanate compounds, diphenylmethane diisocyanate and tolylene diisocyanate are preferably used, among the aliphatic polyisocyanate compounds, modified products of hexamethylene diisocyanate and isophorone diisocyanate are preferably used, and among these, a polyisocyanate compound containing two or more isocyanate groups in a molecule is used in the present invention. For example, a multimer of the previously described polyisocyanate, an addition product of the polyisocyanate with another compound, further, a urethane prepolymer obtained by reacting a low-molecular-weight polyol and a low-molecular-weight polyamine in such a way as to have isocyanate at both ends, and the like are preferable. Examples of the specific polyisocyanate compounds which are commercially available include Duranate D101, Duranate D201, Duranate E402-100, and Duranate 24A-100 (manufactured by Asahi Kasei Corp.), and D-120N, D-160N, and D-376N (manufactured by Mitsui Chemicals, Inc.). In addition, an aliphatic polyisocyanate is preferably used in terms of light resistance of the formed paint film.

Aliphatic isocyanates are inferior to aromatic isocyanates in reactivity and therefore have been difficult to use as a crosslinking component for a polyurethane resin of a conventional type, which utilizes an allophanate bond. Against this, according to studies conducted by the present inventors, the aliphatic isocyanates are practically usable as a crosslinking

component for a polyhydroxyurethane resin that characterizes the present invention and utilizes a hydroxy group in the structure thereof for crosslinking, and aliphatic polyisocyanate compounds are most suitable for the present invention.

In the present invention, a ratio (NCO/OH) of the number of moles of the isocyanate group (NCO) of the previously described compound having two or more isocyanate groups to the number of moles of the hydroxy group (OH) of the polyhydroxyurethane resin that forms the paint composition is preferably 0.2 to 1.1. A more preferred ratio (NCO/OH) is 0.5 to 1.0. It is not preferable that the ratio (NCO/OH) be smaller than 0.2 because the solvent resistance is deteriorated. On the other hand, it is not preferable that the ratio (NCO/OH) is larger than 1.1 because the polyisocyanate is excessive, so that only the isocyanate group at one end is reacted, which does not form a crosslinked state, or the isocyanate group is reacted with moisture later to form a urea bond having high cohesive force, so that self-repairability is deteriorated with the lapse of time.

The paint composition of the present invention may further contain a urethane-curing catalyst in order to obtain the paint film at a lower temperature. Examples of the urethane-curing catalyst include tin octylate, dibutyltin di(2-ethylhexanoate), dioctyltin di(2-ethylhexanoate), dioctyltin diacetate, dibutyltin dilaurate, dibutyltin oxide, dioctyltin oxide, dibutyltin dioctate, monobutyltin trioctate, and dibutyltin fatty acid salt. The urethane-curing catalyst is usually used in a range of about 0 to about 2% by mass, and preferably in a range of 0.01 to 0.1% by mass in terms of the solid content of the polyhydroxyurethane resin.

The polyhydroxyurethane resin that characterizes the present invention is obtained as a synthetic of a cyclic carbonate compound containing at least a polysiloxane-containing cyclic carbonate compound having a Si1-300 dimethyl siloxane group in a structure thereof (hereinafter, referred to as polysiloxane-containing cyclic carbonate compound) and an amine compound. The cyclic carbonate compound which is used when the polyhydroxyurethane resin is synthesized is preferably a reaction product obtained by reaction between an epoxy compound and carbon dioxide. Specifically, the polyhydroxyurethane resin that forms the present invention is preferably synthesized using the cyclic carbonate compound obtained in the manner as described below. For example, an epoxy compound, which is a raw material, is reacted in the presence of a catalyst at a temperature of 0°C to 160°C under an atmosphere of carbon dioxide pressurized at about the atmospheric pressure to about 1 MPa for 4 to 24 hours. As a result, a cyclic carbonate in which carbon dioxide is fixed to ester parts can be obtained.

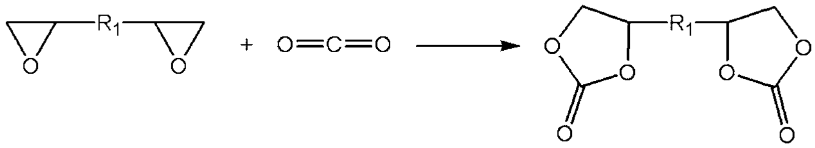

By using the cyclic carbonate compound synthesized using carbon dioxide as a raw material in the manner as described above, a resultant polyhydroxyurethane resin has an -O-CO- bond that fixes carbon dioxide in the structure thereof. With respect to the content of the -O-CO- bond derived from carbon dioxide (the amount of carbon dioxide fixed) in the polyhydroxyurethane resin, if possible, the higher, the better from the standpoint of effective utilization of carbon dioxide. For example, by using the above-described cyclic carbonate compound, carbon dioxide can be contained in the structure of the polyhydroxyurethane resin that forms the paint composition of the present invention in a range of 1 to 20% by mass. That is, it means that the above-described polyhydroxyurethane resin is a resin in which the -O-CO-bond derived from carbon dioxide which is a raw material accounts for 1 to 20% by mass of the mass of the resin.

Examples of a preferred catalyst that is used for the reaction between the epoxy compound and carbon dioxide include halide salts, such as lithium chloride, lithium bromide, lithium iodide, sodium chloride, sodium bromide, and sodium iodide, and quaternary ammonium salts. The use amount of the preferred catalyst is preferably 1 to 50 parts by mass, and more preferably 1 to 20 parts by mass per 100 parts by mass of the epoxy compound which is a raw material. In addition, triphenylphosphine or the like may be used simultaneously in order to improve the solubility of these salts to be catalysts.

The reaction between the epoxy compound and carbon dioxide can also be performed in the presence of an organic solvent (reaction solvent). As the organic solvent which is used when the reaction is performed, any solvent that dissolves the previously mentioned catalyst can be used. Specific examples of the organic solvent include amide-based solvents, such as N, N-dimethylformamide, dimethyl sulfoxide, dimethylacetamide, and N-methyl-2-pyrrolidone, alcohol-based solvents, such as methanol, ethanol, propanol, ethylene glycol, and propylene glycol, and ether-based solvents, such as ethylene glycol monomethyl ether, ethylene glycol dimethyl ether, propylene glycol methyl ether, diethylene glycol monomethyl ether, diethylene glycol dimethyl ether, and tetrahydrofuran.

The polyhydroxyurethane resin that forms the present invention is obtained easily by, for example, using a cyclic carbonate compound obtained in the manner as described above, a polysiloxane-containing cyclic carbonate compound, and an amine compound as synthetic components. The polysiloxane-containing cyclic carbonate compound that is used when the polyhydroxyurethane resin is synthesized is also preferably a compound obtained by the previously described reaction between the epoxy compound and carbon dioxide. In this way, the polysiloxane-modified polyhydroxyurethane

resin that is also excellent in terms of measures against environmental issues and characterizes the present invention can easily be synthesized.

The polysiloxane-containing cyclic carbonate compound that can be used when the polyhydroxyurethane resin that forms the present invention is produced is not particularly limited in terms of the structure thereof, and any of the polysiloxane-containing cyclic carbonate compounds having two or more cyclic carbonate structures in one molecule can be used. For example, a polysiloxane compound (polysiloxane-containing cyclic carbonate compound) represented by the following formula (6), the polysiloxane compound having two cyclic carbonate groups, may be used.

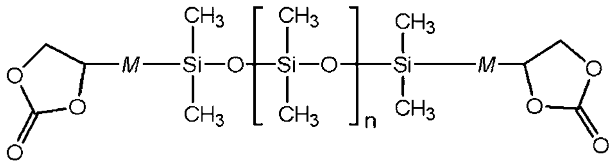

Formula (6)

wherein M represents a C1-30 aliphatic hydrocarbon group, a C4-40 alicyclic hydrocarbon group, or a C6-40 aromatic hydrocarbon group, and these groups optionally have, in a structure thereof, any bond selected from the group consisting of an ether bond, an amino bond, a sulfonyl bond, an ester bond, and a urethane bond, or a hydroxy group, a halogen atom, or a polyalkylene glycol chain having a number of repeating units of 1 to 30 and containing C2-6 alkylene; and n represents a number of 1 to 300.

Examples of a preferred polysiloxane-containing cyclic carbonate compound that is used for producing the polyhydroxyurethane resin that forms the present invention include compounds each having a structure shown below.

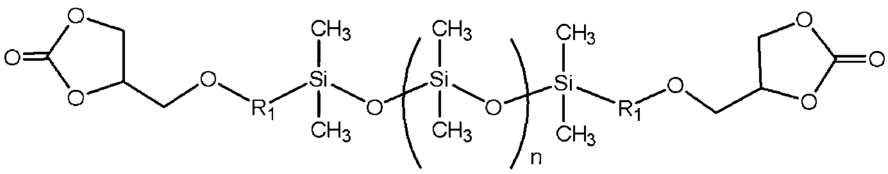

$R_1$ in the formula represents a C1-30, preferably a C3-6 alkylene group, and n represents a number selected from 1 to 300. The molecular weight of this compound is 1000 to 10000, and preferably 1000 to 5000.

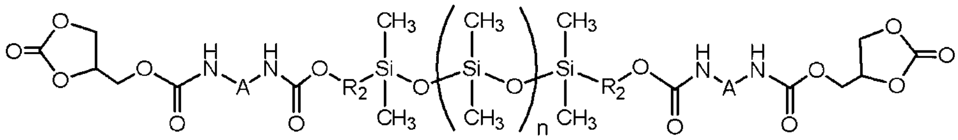

A in the formula represents a chemical structure derived from a polyisocyanate. $R_2$ represents a C3-18, preferably a C5-13 alkylene group which may contain an ether bond, and n represents a number selected from 1 to 300. The molecular weight of this compound is 1000 to 10000, and preferably 1000 to 5000.

By using various polysiloxane-containing cyclic carbonate compounds given as examples above for the synthesis, the paint composition of the present invention, containing a polysiloxane-modified polyhydroxyurethane resin, can stably exhibit the effects of imparting the sliding properties to the formed paint film and reducing the surface tackiness. For this reason, the self-repairability of the formed paint film, which is the object of the present invention, can be achieved more effectively.

The cyclic carbonate compound which can be used for producing the polyhydroxyurethane resin that forms the present invention is not particularly limited, except that at least the previously mentioned polysiloxane-containing cyclic carbonate compound is used for the synthesis, and any of the cyclic carbonate compounds having two or more cyclic carbonate structures in one molecule can be used. For example, any of the cyclic carbonate compounds having a benzene skeleton, an aromatic polycyclic skeleton, or a condensed polycyclic aromatic skeleton, and any of cyclic carbonates of aliphatic cyclic carbonates and alicyclic carbonates can be used. Examples of the compound that can be used are given below.

As the synthetic components that are used for producing the polyhydroxyurethane resin that forms the present invention, compounds given below and having two or more cyclic carbonate structures in one molecule can appropriately be used in addition to the polysiloxane-containing cyclic carbonate compounds as described above. Examples of the compounds having a benzene skeleton, an aromatic polycyclic skeleton, or a condensed polycyclic aromatic skeleton include the following compounds. Note that R in any of the following formulas represents H or $CH_3$.

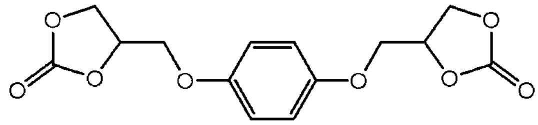

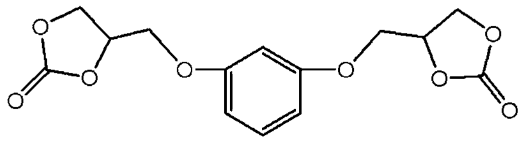

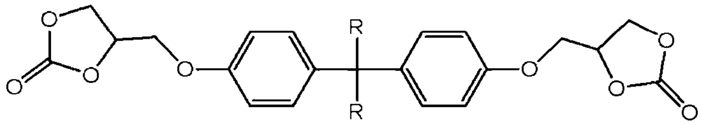

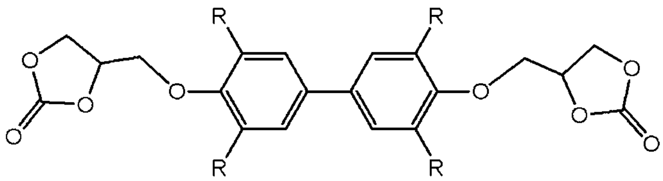

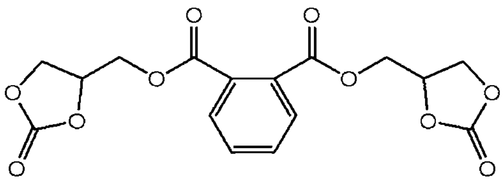

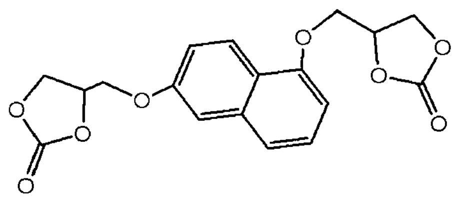

Examples of the aliphatic cyclic carbonate or the alicyclic carbonate include the following compounds.

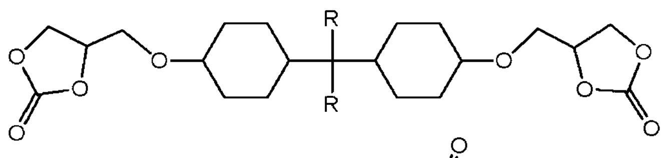

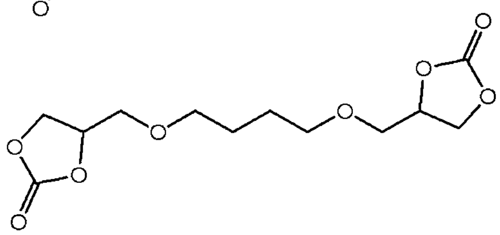

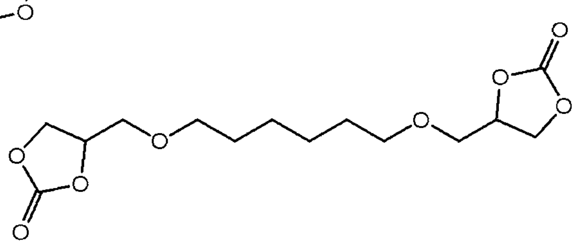

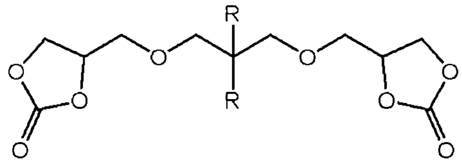

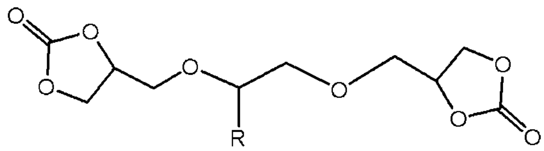

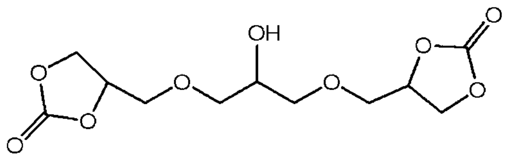

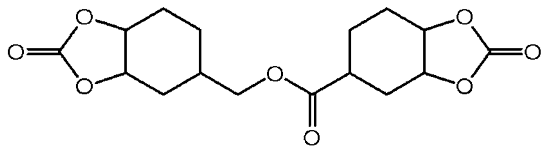

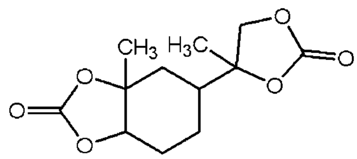

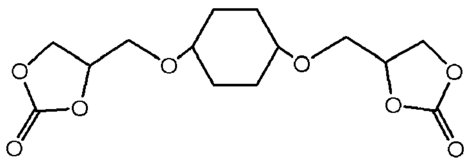

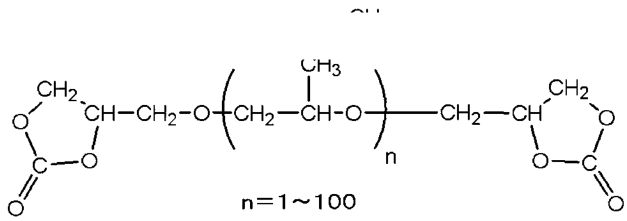

n=1～100

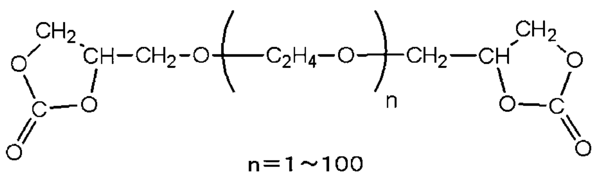

n=1～100

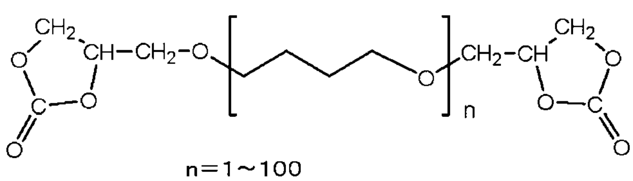

n=1～100

When the polyhydroxyurethane resin that forms the present invention obtained in the manner as described above has a 20% modulus at 25°C of 0.3 to 9.5 MPa, the self-repairability and the degree of elongation of a crosslinked paint film which is obtained by curing the polyhydroxyurethane resin with a curing agent are improved, and therefore such a polyhydroxyurethane resin is preferably used. With respect to a method for adjusting the 20% modulus of the polyhydroxyurethane resin that forms the present invention in the above-described range, the 20% modulus can be adjusted by combining various cyclic carbonate compounds given as examples above. For example, the aliphatic cyclic carbonate compound is preferably used as a raw material for the resin in order to lower the 20% modulus of the resin. Particularly, it is useful to use the aliphatic carbonate compound having a repeating unit such as a polypropylene glycol skeleton or a polytetramethylene glycol skeleton. However, the use of the cyclic carbonate having a special structure has a problem in that it increases costs industrially, and as a substitute for such a compound, a cyclic carbonate compound represented by the following formula (8) is preferably used. By using the compound represented by formula (8), the polysiloxane-modified polyhydroxyurethane resin that forms the present invention contains the previously specified structural unit represented by formula (7).

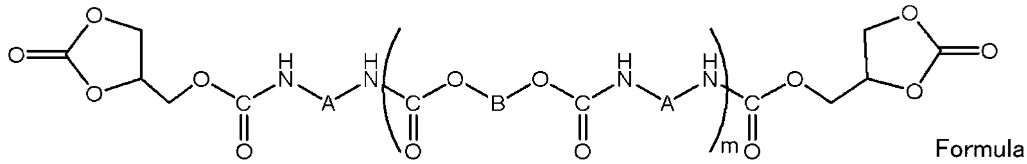

Formula (8)

wherein A represents a chemical structure derived from a polyisocyanate; B represents a chemical structure derived from a polyol; and m represents any number of 1 to 6.

The above-described cyclic carbonate compound represented by formula (8) can be produced using (a) a polyol, (b) a polyisocyanate, and (c)glycerin carbonate or glycidol as raw materials.

The polyol which is the (a) component is not particularly limited, and a polyol which is generally used for producing a polyurethane resin can be used. Any of polyols, such as, for example, polyester-based polyols including caprolactone-based polyols and adipate-based polyols, polyether-based polyols including polypropylene glycol-based polyols, polyethylene oxide-based polyols, and polytetramethylene glycol-based polyols, and polycarbonate-based polyols, can be used. Among these, aliphatic polyether-based polyols are useful. The molecular weight of the polyol is not particularly limited, but the polyol having a number average molecular weight of 400 to 3000 is preferable.

Also, the polyisocyanate which is the (b) component is not particularly limited. Examples of a preferred compound include hexamethylene diisocyanate, isophorone diisocyanate, pentamethylene diisocyanate, lysine diisocyanate, xylylene diisocyanate, and toluene diisocyanate.

As the (c) component, glycerin carbonate is used. Glycidol may be used in place of glycerin carbonate, and from a resultant epoxy-terminated compound, the cyclic carbonate compound may be obtained using carbon dioxide.

The cyclic carbonate compound represented by formula (8) is obtained easily by reacting the above-described (a) component, (b) component, and (c) component. The order of reactions is not particularly limited. Among others, a reaction method in which the (a) component and the (b) component are reacted firstly, and subsequently, at the stage where a certain amount of the isocyanate group decreases, the (c) component is added is preferable. It is preferable to set the order of reactions in this way because the heat of reaction that is generated due to the (c) component which has a low molecular weight and is easily reacted can be suppressed, which is industrially advantageous.

The blending ratios of the respective components are crucial to control the final concentration of the carbonate group. For example, the molar ratio of the (a) component to the (b) component in reaction (molar ratio of OH group:NCO group) is preferably in a range of 1:2 to 1:1.2. A more preferred range is 1:2 to 1:1.5. In addition, the blending ratio of the (c) component is basically equivalent to the molar ratio of the isocyanate group which is excessive, and when the blending ratio of the (c) component is in a range of the equivalent ± 10%, the (c) component can be used.

The synthesis of the previously described compound represented by formula (8) can be performed without a solvent or in the presence of an organic solvent (reaction solvent). In addition, a solvent which is used in the synthesis of a general polyurethane resin can be used without any particular limitation. Examples of a preferred solvent include toluene, xylene, benzene, hexane, ethyl acetate, methyl isobutyl ketone, cyclohexanone, tetrahydrofuran, dioxane, N,N-dimethylformamide, N-methylpyrrolidone, dimethyl sulfoxide, ethylene glycol dimethyl ether, and diethylene glycol dimethyl ether. The solvent used may be left as it is for use as a solution of the cyclic carbonate compound in the following step. Alternatively, the solvent used may be distilled away under reduced pressure as necessary to prepare the cyclic carbonate compound in a state without a solvent for use in the following step.

In addition, the reaction can be facilitated by using a catalyst. To facilitate the reaction, basic catalysts, such as triethylamine, tributylamine, diazabicycloundecene (DBU), triethylenediamine (DABCO), pyridine, and hydroxypyridine, Lewis acid catalysts, such as tetrabutyltin and dibutyltin dilaurate, and the like can be used. The preferred use amount of these catalysts is about 0.001 to about 0.1 parts by mass based on the total amount (100 parts by mass) of reactants.

With respect to the reaction temperature, the optimum temperature changes depending on the types of the previously described solvent and catalyst. The amount of the catalyst may be adjusted in such a way that the reaction proceeds preferably within a range of 20°C to 140°C, and more preferably at 60°C to 120°C.

The polyhydroxyurethane resin that forms the present invention can easily be produced by the above-described reaction between a cyclic carbonate compound containing at least a polysiloxane-containing cyclic carbonate compound and a multifunctional amine compound. As the multifunctional amine compound which is used in the production, any of conventionally known multifunctional amine compounds can be used. Examples of a preferred multifunctional amine compound include chain aliphatic polyamines, such as ethylenediamine, 1,3-diaminopropane, 1,4-diaminobutane, 1,6-diaminohexane, 1,8-diaminooctane, 1,10-diaminodecane, and 1,12-diaminododecane, cyclic aliphatic polyamines, such as isophoronediamine, norbornanediamine, 1,6-cyclohexanediamine, piperazine, and 2,5-diaminopyridine, aliphatic polyamines having an aromatic ring, such as xylylenediamine, and aromatic polyamines, such as meta-phenylenediamine and diaminodiphenylmethane.

The method for producing the polysiloxane-modified polyhydroxyurethane resin that can be obtained from the above-described components is not particularly limited. Specifically, the polysiloxane-modified polyhydroxyurethane resin can easily be obtained by, for example, a method as described below. That is, the polysiloxane-modified polyhydroxyurethane resin can be obtained by mixing a cyclic carbonate compound as described previously and an amine compound as described above in the presence of a reaction solvent or in the absence of a reaction solvent and reacting a resultant mixture at a temperature of 40 to 200°C for 4 to 24 hours.

As the reaction solvent which can be used for the production, any of the organic solvents which are inactive to the raw materials to be used and the resultant polysiloxane-modified polyhydroxyurethane resin can be used. Examples of a preferred reaction solvent include methyl ethyl ketone, methyl-n-propyl ketone, methyl isobutyl ketone, diethyl ketone, methyl formate, ethyl formate, propyl formate, methyl acetate, ethyl acetate, butyl acetate, acetone, cyclohexanone, tetrahydrofuran, dioxane, toluene, xylene, dimethylformamide (DMF), dimethyl sulfoxide, perchloroethylene, trichloroethylene, methanol, ethanol, propanol, ethylene glycol, propylene glycol, ethylene glycol monomethyl ether, ethylene glycol dimethyl ether, propylene glycol methyl ether, diethylene glycol monomethyl ether, and diethylene glycol dimethyl ether.

The production of the polyhydroxyurethane resin can be performed without using any catalyst in particular. However, the production can also be performed in the presence of any of the catalysts given below for the purpose of facilitating the reaction. For example, basic catalysts, such as triethylamine, tributylamine, diazabicycloundecene (DBU), triethylenediamine (DABCO), pyridine, and Lewis acid catalysts, such as tetrabutyltin and dibutyltin dilaurate, and the like can be used. The preferred use amount of these catalysts is 0.01 to 10 parts by mass based on the total amount (100 parts by mass) of the carbonate compound and the amine compound to be used.

To the paint composition of the present invention, various additives given below as examples may be added as necessary in addition to the above-described polyhydroxyurethane resin having a particular structure specified in the present invention. Examples of the additives include an antioxidizing agent (such as a hindered phenol-based, phosphite-based, or thioether-based antioxidizing agent), a light stabilizer (such as a hindered amine-based light stabilizer), an ultraviolet ray absorber (such as a benzophenone-based or benzotriazole-based light stabilizer), a stabilizer to coloration by gas (such as a hydrazine-based stabilizer to coloration by gas), a hydrolysis-preventing agent (such as a carbodiimide), and a metal deactivator. Two or more of these additives may be used together. Similarly, a metal filler, a matting agent, and various pigments may be added and contained in the paint composition of the present invention in order to impart designability.

The method for applying the paint composition of the present invention, which is obtained in the manner as described above, is not particularly limited, and examples thereof include a spray method, a natural roll coat method, a reverse roll coat method, and a curtain flow coat method, and the amount of the paint composition to be applied is usually about 10 to about 30 $g/m^2$. In addition, the condition for forming the paint film is not particularly limited, but the formation of the paint film is usually performed at about 70 to about 170°C for about 20 minutes to about 1 hour.

The paint film obtained by applying and curing the paint composition is also included in the present invention. Examples of the curing method include, but not particularly limited to, a method of performing heat curing using a dryer or the like. The film thickness of the paint film is preferably about 3 to about 200 $\mu$m in terms of satisfactory self-repairability and drying properties. The film thickness of the paint film is more preferably about 10 to about 50 $\mu$m. The paint film of the present invention is excellent in resistance to a scratch and a dirt due to an organic solvent or the like and therefore can suitably be used for as topcoat for various substrates.

## Examples

Next, the present invention will be described in more detail giving specific Production Examples, Examples, Reference Examples, and Comparative Examples. Note that each of "parts" and "%" in the following examples is on a mass basis unless otherwise noted.

<Production Example 1> [Synthesis of Cyclic Carbonate-containing Compound (I)]

In a reaction container equipped with a stirring apparatus and a reflux device having an atmosphere release port, 100 parts of a bisphenol A type epoxy resin having an epoxy equivalent of 187 (trade name "Epotohto YD-128," manufactured by NIPPON STEEL Chemical & Materials CO., LTD.), 20 parts of sodium iodide (manufactured by FUJIFILM Wako Pure Chemical Corporation, the same applies hereinafter), and 150 parts of N-methyl-2-pyrrolidone were charged. Subsequently, reaction was performed at 100°C for 10 hours while allowing carbon dioxide to flow continuously therein under stirring. Thereafter, 300 parts of water was added to the reaction solution to precipitate a product, and the product was separated by filtration. A resultant white powder was recrystallized with toluene to obtain 52 parts of a white powder (yield 42%).

The obtained white powder was analyzed by infrared spectroscopy (IR) (an apparatus of JASCO Corporation, trade name "FT/IR-350," was used, the same applies to the other examples) to find that a peak around 910 $cm^{-1}$ derived from epoxy, which is a raw material, had disappeared, and a peak derived from carbonyl of a carbonate group not existing in the raw material was ascertained at around 1800 $cm^{-1}$. In addition, as a result of analysis by high performance liquid chromatography (HPLC) (an apparatus of JASCO Corporation, trade name "LC-2000," was used) (column: Fine Pak SIL C18-T5, mobile phase: acetonitrile + water), it was found that a peak of the raw material disappeared, a new peak appeared on the higher polarity side, and the purity was 98%. Further, as a result of differential scanning calorimetry measurement (DSC measurement), it was found that the melting point was 178°C and the range of the melting point was ±5°C. From those described above, it was ascertained that this powder is a compound having a structure represented by the following formula (I), in which a cyclic carbonate group was introduced by reaction between an epoxy group and carbon dioxide. Hereinafter, this refers to a cyclic compound (I). The proportion of the component derived from carbon dioxide in the chemical structure of this cyclic compound (I) was 20.5% (calculated value).

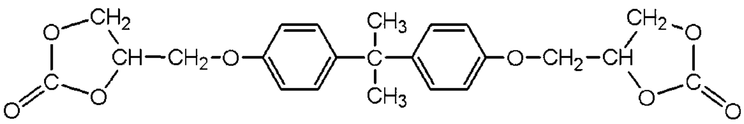

(I)

<Production Example 2> [Synthesis of Cyclic Carbonate-containing Compound (II)]

In a reaction container equipped with a stirring apparatus and a reflux device having an atmosphere release port, 100 parts of an epoxy resin having an epoxy equivalent of 435 (trade name "Epogosei PT," manufactured by Yokkaichi Chemical Company Limited), 8.6 parts of sodium iodide, and 150 parts of N-methyl-2-pyrrolidone were charged. Subsequently, reaction was performed at 100°C for 10 hours while allowing carbon dioxide to flow continuously therein under stirring. Thereafter, after the reaction was completed, 400 parts of ethyl acetate and 800 parts of water was added, and a resultant mixture was stirred for 1 hour. Thereafter, an ethyl acetate phase was collected to remove the solvent with an evaporator to obtain 90.4 parts of an oily compound (yield 82.1%).

The obtained compound was analyzed by IR to find that a peak around 910 $cm^{-1}$ derived from epoxy, which is a raw material, had disappeared, and, on the other hand, a peak derived from carbonyl of a carbonate group not existing in the raw material was ascertained at around 1800 $cm^{-1}$. In addition, as a result of measurement by gel permeation chromatography (GPC) using N,N-dimethylformamide (DMF) as a mobile phase, it was found that the obtained substance had a weight average molecular weight of 970 (in terms of polyethylene oxide). From those described above, it was ascertained that this substance is a compound having a structure represented by the following formula (II), in which a five-membered cyclic carbonate group was introduced by reaction between an epoxy group and carbon dioxide. Hereinafter, this refers to a cyclic compound (II). The proportion of the component derived from carbon dioxide in the chemical structure of this cyclic compound (II) was 9.2% (calculated value).

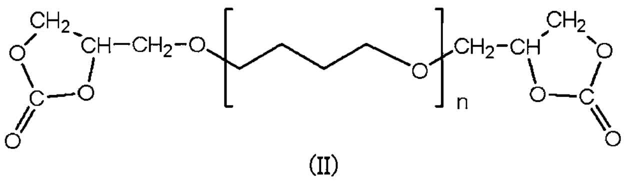

(II)

**wherein n represents a value that makes the molecular weight 970.**

<Production Example 3> [Synthesis of Polyol Cyclic Carbonate-containing Compound (III)]

In a reaction container equipped with a stirrer, a thermometer, and a reflux cooler, 100 parts of polytetramethylene glycol having a number average molecular weight of 1000 (trade name "PTHF-1000S," manufactured by BASF SE) and 44.4 parts of isophorone diisocyanate (IPDI) were placed. After N,N-dimethylformamide (hereinafter, abbreviated as DMF) was put therein in such a way that the solid content was 30%, and a resultant mixture was dissolved uniformly, reaction was performed at 60°C for 7 hours. After ascertaining that NCO% became 1.7%, 23.6 parts of glycerin carbonate was added to perform reaction further for 5 hours. It was ascertained that a peak around 2260 $cm^{-1}$ derived from NCO had disappeared by IR. Further, it was ascertained that a resultant reaction product is a compound represented by the following formula (III), the compound having a chemical structure corresponding to formula (7) that is specified in the present invention, specifically corresponding to the previously described chemical structure of formula (8). Hereinafter, this refers to a cyclic compound (III).

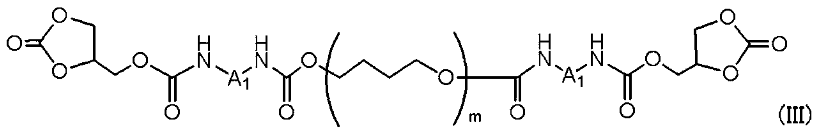

(III)

wherein m represents a value that makes the molecular weight 1680, and $A_1$ each independently represent

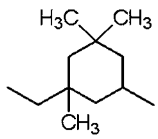

or

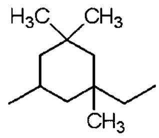

.

<Production Example 4> [Synthesis of Polysiloxane-containing Cyclic Carbonate Compound (IV)]

In a reaction container equipped with a stirrer, a thermometer, a gas-introducing pipe, and a reflux cooler, 100 parts of a divalent epoxy-modified polysiloxane having an epoxy equivalent of 1000 (trade name "X-22-163A," manufactured by Shin-Etsu Chemical Co., Ltd.), 4.3 parts of sodium iodide, and 150 parts of N-methyl-2-pyrrolidone were charged. Subsequently, reaction was performed at 100°C for 10 hours while allowing carbon dioxide to flow continuously therein under stirring.

After the reaction was completed, 200 parts of n-hexane was added to a resultant solution for dilution, and a resultant mixture was then washed three times with 200 parts of pure water in a separatory funnel to remove N-methylpyrrolidone and sodium iodide. Thereafter, the n-hexane solution was dehydrated with magnesium sulfate, and the solvent was then removed with an evaporator to obtain 92 parts (yield 88.1%) of a colorless transparent polysiloxane-containing cyclic carbonate compound (IV) in liquid form. The obtained compound was analyzed by IR to find that a peak around 910 $cm^{-1}$ derived from epoxy, which is a raw material, had disappeared, and on the other hand, a peak derived from a carbonyl group of a carbonate group not existing in the raw material was ascertained at around 1800 $cm^{-1}$. In addition, as a result of measurement by gel permeation chromatography (GPC) using DMF as a mobile phase, it was found that the obtained substance had a weight average molecular weight of 2088 (in terms of polyethylene oxide). From those described above, it was ascertained that this substance is a compound having a structure represented by the following formula (IV), the compound having a structure corresponding to formula (6) that is specified in the present invention, the structure being such that a five-membered cyclic carbonate group is introduced by the reaction between an epoxy group and carbon dioxide. Hereinafter, this refers to a cyclic compound (IV). The proportion of the component derived from carbon dioxide in the chemical structure of this cyclic compound (IV) was 4.2% (calculated value). Note that in the formula, n represents a value that makes the weight average molecular weight 2088, and $R_1$ represents - $C_3H_6$-. This compound has a polysiloxane chain content by percentage of 84.8%.

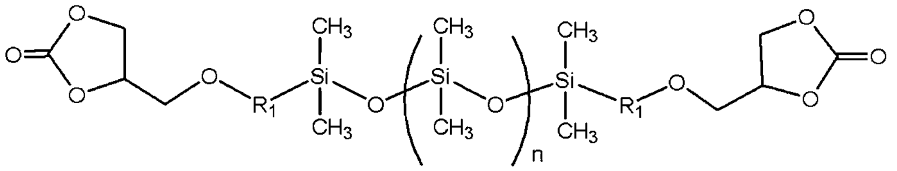

(IV)

<Production Example 5> [Synthesis of Siloxane Polyol-containing Carbonate Compound (V)]

In a reaction container equipped with a stirrer, a thermometer, and a reflux cooler, 100 parts of a carbinol-modified polysiloxane having a number average molecular weight of 1800 (trade name "KF-6001," manufactured by Shin-Etsu Chemical Co., Ltd.), and 24.7 parts of isophorone diisocyanate (IPDI) were placed. After N,N-dimethylformamide (DMF) was put therein in such a way that the solid content was 30%, and a resultant mixture was dissolved uniformly, reaction was performed at 60°C for 7 hours. After ascertaining that NCO% became 1.1%, 13.1 parts of glycerin carbonate was added to perform reaction further for 5 hours. It was ascertained that a peak around 2260 $cm^{-1}$ derived from NCO had disappeared by IR and a reaction product is a compound represented by the following formula, the compound having a structure corresponding to formula (6) specified in the present invention. Hereinafter, this refers to a cyclic compound (V).

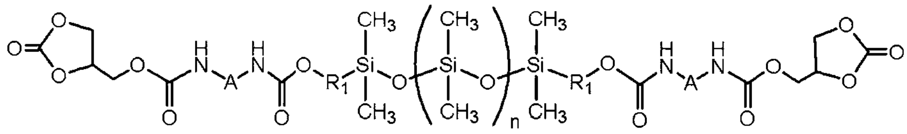
(V)

wherein n represents a value that makes the molecular weight 2480, and A represents a structure derived from isophorone diisocyanate.

In formula (V), $R_1$ represents $-C_3H_6-O-C_2H_4-$. This compound has a polysiloxane chain content by percentage of 64.3%.

<Production Example 6> [Synthesis of Polysiloxane-modified Polyhydroxyurethane Resin A]

In a reaction container equipped with a stirring apparatus having a torque meter attached thereto and a reflux device having an atmosphere release port, 100 parts of the cyclic compound (I), 145 parts of the cyclic compound (III), 5 parts of the polysiloxane-containing cyclic compound (IV), and 36.5 parts of hexamethylenediamine (manufactured by Asahi Kasei Corp.) were added. Further, 286.5 parts of DMF was added as a reaction solvent, and reaction was performed for 24 hours under stirring at a temperature of 100°C to obtain a solution of a polysiloxane-modified polyhydroxyurethane resin, the solution having a solid content of 50%. The resin (HPU-A) that forms the obtained solution had a weight average molecular weight of 33000 (in terms of polystyrene), as measured by GPC using DMF as a mobile phase. In addition, the resin (HPU-A) had a hydroxyl value of 123.3 mgKOH/g in terms of the solid content and had a carbon dioxide content of 7.2%.

In addition, the resin (HPU-A) had a polysiloxane content of 1.5%. In the present invention, the polysiloxane content in the polysiloxane-modified polyhydroxyurethane resin was calculated from the combinations of the raw materials for the resin. Note that the polysiloxane content of the polysiloxane compound, which is a raw material, is determined by the theoretical amount from the structural formula. The polysiloxane content of the other polysiloxane-modified resins was also calculated in the same manner, and Table 1 shows the results altogether.

Measurement of strength properties was performed using the resin solution obtained above in the following manner. Firstly, a film having a thickness of about 50 μm was prepared using the resin solution obtained above and drying the resin solution at 100°C for 5 minutes, and then a resin test piece to be used for the measurement of the strength properties was prepared by a method in accordance with JIS K7127. The measurement for the test piece prepared above was performed using a tensile tester (model name "Autograph AGS-100A," manufactured by Shimadzu Corporation) with a tensile speed of 100 mm/min under a temperature condition of 25°C. As a result, the stress during 20% elongation (written as "20% Modulus" in Table 1) was 3.3 MPa, the breaking strength was 24.5 MPa, and the breaking elongation was 650%. Table 1 shows the components for forming the polysiloxane-modified polyhydroxyurethane resins and the characteristics of the obtained resins A together.

<Production Example 7> [Synthesis of Polysiloxane-modified Polyhydroxyurethane Resin B]

In a reaction container equipped with a stirring apparatus having a torque meter attached thereto and a reflux device having an atmosphere release port, 100 parts of the cyclic compound (I), 292 parts of the cyclic compound (III), 8 parts of the polysiloxane-containing cyclic compound (IV), and 47.2 parts of hexamethylenediamine were added. Further, 447.2 parts of DMF was added as a reaction solvent, and reaction was performed for 24 hours under stirring at a temperature of 100°C to obtain a solution of a polysiloxane-modified polyhydroxyurethane resin, the solution having a solid content of 50%. The resin (HPU-B) that forms the obtained solution had a weight average molecular weight of 37000 (in terms of polystyrene), as measured by GPC using DMF as a mobile phase. In addition, the resin (HPU-B) had a hydroxyl value of 102.1 mgKOH/g in terms of the solid content and had a carbon dioxide content of 4.7%.

Measurement of the strength properties was performed using the above-obtained resin solution in the same

manner as in Production Example 6. As a result, the stress during 20% elongation was 1.5 MPa, the breaking strength was 18.5 MPa, and the breaking elongation was 900%. The results are shown in Table 1.

<Production Example 8> [Synthesis of Polysiloxane-modified Polyhydroxyurethane Resin C]

In a reaction container equipped with a stirring apparatus having a torque meter attached thereto and a reflux device having an atmosphere release port, 100 parts of the cyclic compound (I), 144.7 parts of the cyclic compound (II), 5.3 parts of the polysiloxane-containing cyclic compound (IV), and 43.7 parts of hexamethylenediamine were added. Further, 293.7 parts of DMF was added as a reaction solvent, and reaction was performed for 24 hours under stirring at a temperature of 100°C to obtain a solution of a polysiloxane-modified polyhydroxyurethane resin, the solution having a solid content of 50%. The resin (HPU-C) that forms the obtained solution had a weight average molecular weight of 35000 (in terms of polystyrene), as measured by GPC using DMF as a mobile phase. In addition, the resin (HPU-C) had a hydroxyl value of 143.9 mgKOH/g in terms of the solid content and had a carbon dioxide content of 11.6%.

Measurement of the strength properties was performed using the above-obtained resin solution in the same manner as in Production Example 6. As a result, the stress during 20% elongation was 4.1 MPa, the breaking strength was 16.5 MPa, and the breaking elongation was 800%. These measurement results are shown in Table 1.

<Production Example 9> [Synthesis of Polysiloxane-modified Polyhydroxyurethane Resin D]

In a reaction container equipped with a stirring apparatus having a torque meter attached thereto and a reflux device having an atmosphere release port, 100 parts of the cyclic compound (I), 143.4 parts of the cyclic compound (III), 6.6 parts of the polysiloxane-containing cyclic compound (V), and 36.4 parts of hexamethylenediamine were added. Further, 286.4 parts of DMF was added as a reaction solvent, and reaction was performed for 24 hours under stirring at a temperature of 100°C to obtain a solution of a polysiloxane-modified polyhydroxyurethane resin, the solution having a solid content of 50%. The resin (HPU-D) that forms the obtained solution had a weight average molecular weight of 39000 (in terms of polystyrene), as measured by GPC using DMF as a mobile phase. In addition, the resin (HPU-D) had a hydroxyl value of 123.1 mgKOH/g in terms of the solid content and had a carbon dioxide content of 7.2%.

Measurement of the strength properties was performed using the above-obtained resin solution in the same manner as in Production Example 6. As a result, the stress during 20% elongation was 2.7 MPa, the breaking strength was 22.0 MPa, and the breaking elongation was 620%. These measurement results are shown in Table 1.

<Production Example 10> [Synthesis of Polysiloxane-modified Polyhydroxyurethane Resin E]

In a reaction container equipped with a stirring apparatus having a torque meter attached thereto and a reflux device having an atmosphere release port, 100 parts of the cyclic compound (I), 143 parts of the cyclic compound (II), 7 parts of the polysiloxane-containing cyclic compound (V), and 43.5 parts of hexamethylenediamine were added. Further, 293.5 parts of DMF was added as a reaction solvent, and reaction was performed for 24 hours under stirring at a temperature of 100°C to obtain a solution of a polysiloxane-modified polyhydroxyurethane resin, the solution having a solid content of 50%. The resin (HPU-E) that forms the obtained solution had a weight average molecular weight of 38000 (in terms of polystyrene), as measured by GPC using DMF as a mobile phase. In addition, the resin (HPU-E) had a hydroxyl value of 143.5 mgKOH/g in terms of the solid content and had a carbon dioxide content of 11.5%.

Measurement of the strength properties was performed using the above-obtained resin solution in the same manner as in Production Example 6. As a result, the stress during 20% elongation was 3.5 MPa, the breaking strength was 17.8 MPa, and the breaking elongation was 820%. These measurement results are shown in Table 1.

<Production Example 11> [Synthesis of Polysiloxane-modified Polyhydroxyurethane Resin F]

In a reaction container equipped with a stirring apparatus having a torque meter attached thereto and a reflux device having an atmosphere release port, 100 parts of the cyclic compound (I), 140 parts of the cyclic compound (III), 10 parts of the polysiloxane-containing cyclic compound (IV), and 36.4 parts of hexamethylenediamine were added. Further, 286.4 parts of DMF was added as a reaction solvent, and reaction was performed for 24 hours under stirring at a temperature of 100°C to obtain a solution of a polysiloxane-modified polyhydroxyurethane resin, the solution having a solid content of 50%. The resin (HPU-F) that forms the obtained solution had a weight average molecular weight of 31000 (in terms of polystyrene), as measured by GPC using DMF as a mobile phase. In addition, the resin (HPU-F) had a hydroxyl value of 123.1 mgKOH/g in terms of the solid content and had a carbon dioxide content of 7.3%.

Measurement of the strength properties was performed using the above-obtained resin solution in the same manner as in Production Example 6. As a result, the stress during 20% elongation was 3.2 MPa, the breaking strength was 21.5 MPa, and the breaking elongation was 600%. These measurement results are shown in Table 1.

<Production Example 12> [Synthesis of Polysiloxane-modified Polyhydroxyurethane Resin G for Comparative Example]

In a reaction container equipped with a stirring apparatus having a torque meter attached thereto and a reflux device having an atmosphere release port, 100 parts of the cyclic compound (I), 46.8 parts of the cyclic compound (III), 3.2 parts of the polysiloxane-containing cyclic compound (IV), and 29.4 parts of hexamethylenediamine were added. Further, 179.4 parts of DMF was added as a reaction solvent, and reaction was performed for 24 hours under stirring at a temperature of 100°C to obtain a solution of a polysiloxane-modified polyhydroxyurethane resin, the solution having a solid content of 50%. The obtained resin had a weight average molecular weight of 32000 (in terms of polystyrene), as measured by GPC using DMF as a mobile phase. In addition, the resin had a hydroxyl value of 158.6 mgKOH/g in terms of the solid content and had a carbon dioxide content of 11.5%.

Measurement of the strength properties was performed using the above-obtained resin solution in the same manner as in Production Example 6. As a result, the stress during 20% elongation was 14.5 MPa, which exceeded the range of the stress for the resin specified in the present invention, and the 20% modulus at 25°C of a crosslinked paint film to be formed using this resin was predicted to exceed the range specified in the present invention. Therefore, the resin solution was used for Comparative Example. In addition, the breaking strength was 29.8 MPa, and the breaking elongation was 340%. These measurement results are shown in Table 1.

<Production Example 13> [Synthesis of Polyhydroxyurethane Resin H for Comparative Example]

In a reaction container equipped with a stirring apparatus having a torque meter attached thereto and a reflux device having an atmosphere release port, 100 parts of the cyclic compound (I), 150 parts of the cyclic compound (III), and 36.6 parts of hexamethylenediamine were added. Further, 286.6 parts of DMF was added as a reaction solvent, and reaction was performed for 24 hours under stirring at a temperature of 100°C to obtain a solution of a polyhydroxyurethane resin, the solution having a solid content of 50%. The obtained resin had a weight average molecular weight of 32000 (in terms of polystyrene), as measured by GPC using DMF as a mobile phase. In addition, the resin had a hydroxyl value of 123.5 mgKOH/g in terms of the solid content and had a carbon dioxide content of 7.2%.

Measurement of the strength properties was performed using the above-obtained resin solution in the same manner as in Production Example 6. As a result, the stress during 20% elongation was 3.4 MPa, the breaking strength was 25.0 MPa, and the breaking elongation was 630%. These measurement results are shown in Table 1. The resin (HPU-H) had a polysiloxane content of 0.0%, and therefore the resin does not correspond to the resin that is used in the present invention and was used for Comparative Example.

The compositions of the synthetic components for obtaining the resin solutions, which were obtained in Production Examples 6 to 13, and which contains the resins (HPU-A) to (HPU-H), and the properties of the obtained resins are shown together in Table 1.

Table 1: Properties of polyhydroxyurethane resin obtained in Production Examples 6 to 12

| | Production Example 6 | Production Example 7 | Production Example 8 | Production Example 9 | Production Example 10 | Production Example 11 | Production Example 12 | Production Example 13 |
|---|---|---|---|---|---|---|---|---|
| | HPU-A | HPU-B | HPU-C | HPU-D | HPU-E | HPU-F | HPU-G | HPU-H |
| Cyclic compound (I) | 100 | 100 | 100 | 100 | 100 | 100 | 100 | 100 |
| Cyclic compound (II) | | | 144.7 | | 143 | | | |
| Cyclic compound (III) | 145 | 292 | | 143.4 | | 140 | 46.8 | 150 |
| Cyclic compound (IV) | 5 | 8 | 5.3 | | | 10 | 3.2 | |
| Cyclic compound (V) | | | | 6.6 | 7 | | | |
| Hexamethylene diamine | 36.5 | 47.2 | 43.7 | 36.4 | 43.5 | 36.4 | 29.4 | 36.6 |
| Polysiloxane content (%) | 1.5 | 1.5 | 1.5 | 1.5 | 1.5 | 3.0 | 1.5 | Not contained |
| Carbon dioxide content (%) | 7.2 | 4.7 | 11.6 | 7.2 | 11.5 | 7.3 | 11.5 | 7.2 |
| Hydroxyl value (mgKOH/g) | 123.3 | 102.1 | 143.9 | 123.1 | 143.5 | 123.1 | 158.6 | 123.5 |
| Hydroxyl equivalent (g/mol) | 455.0 | 549.6 | 389.7 | 455.9 | 391.1 | 455.1 | 353.8 | 454.1 |
| 20% Modulus (MPa) | 3.3 | 1.5 | 4.1 | 2.7 | 3.5 | 3.2 | 14.5 | 3.4 |
| Breaking strength (MPa) | 24.5 | 18.5 | 16.5 | 22 | 17.8 | 21.5 | 29.8 | 25.0 |
| Breaking elongation (%) | 650 | 900 | 800 | 620 | 820 | 600 | 340 | 630 |
| Weight average molecular weight | 33000 | 37000 | 35000 | 39000 | 38000 | 31000 | 32000 | 32000 |

[Example 1]

A paint composition having a non-volatile component content of 50% was prepared by adding 30.4 parts of Duranate E402-100 (NCO%:9.1%, manufactured by Asahi Kasei Corp.) as a curing agent, 0.015 parts of dibutyltin dilaurate KS-1260 (manufactured by KYODO CHEMICAL COMPANY LIMITED, the same applies hereinafter) as a urethane-curing catalyst, and 30.4 parts of DMF to 100 parts of the 50% solution of the polysiloxane-modified polyhydroxyurethane resin HPU-A, obtained in Production Example 6, and stirring a resultant mixture at 25°C for 5 minutes until it became uniform. This paint composition was applied onto a polyethylene terephthalate film (hereinafter, abbreviated as PET) having a thickness of 100 μm with a bar coater in such a way that the dried film thickness was 15 μm, and the applied paint composition was dried with a drying machine at 100°C for 5 minutes and then reacted at 80°C for 30 minutes to prepare a test piece. Measurement with FT-IR (manufactured by Shimadzu Corporation, the same applies hereinafter) was performed for this test piece to ascertain that an isocyanate group does not exist.

[Example 2]

A paint composition having a non-volatile component content of 50% was prepared by adding 25.2 parts of Duranate E402-100, 0.015 parts of dibutyltin dilaurate KS-1260 as a urethane-curing catalyst, and 25.2 parts of DMF to 100 parts of the 50% solution of HPU-B, obtained in Production Example 7, and stirring a resultant mixture at 25°C for 5 minutes until it became uniform. A test piece was prepared in the same manner as in Example 1, except that this paint composition was used. Measurement with FT-IR was performed for this test piece to ascertain that an isocyanate group does not exist.

[Example 3]

A paint composition having a non-volatile component content of 50% was prepared by adding 35.5 parts of Duranate E402-100, 0.015 parts of dibutyltin dilaurate KS-1260 as a urethane-curing catalyst, and 35.5 parts of DMF to 100 parts of the 50% solution of HPU-C, obtained in Production Example 8, and stirring a resultant mixture at 25°C for 5 minutes until it became uniform. A test piece was prepared in the same manner as in Example 1, except that this paint composition was used. Measurement with FT-IR was performed for this test piece to ascertain that an isocyanate group does not exist.

[Example 4]

A paint composition having a non-volatile component content of 50% was prepared by adding 30.4 parts of Duranate E402-100, 0.015 parts of dibutyltin dilaurate KS-1260 as a urethane-curing catalyst, and 30.4 parts of DMF to 100 parts of the 50% solution of HPU-D, obtained in Production Example 9, and stirring a resultant mixture at 25°C for 5 minutes until it became uniform. A test piece was prepared in the same manner as in Example 1, except that this paint composition was used. Measurement with FT-IR was performed for this test piece to ascertain that an isocyanate group does not exist.

[Example 5]

A paint composition having a non-volatile component content of 50% was prepared by adding 35.4 parts of Duranate E402-100, 0.015 parts of dibutyltin dilaurate KS-1260 as a urethane-curing catalyst, and 35.4 parts of DMF to 100 parts of the 50% solution of HPU-E, obtained in Production Example 10, and stirring a resultant mixture at 25°C for 5 minutes until it became uniform. A test piece was prepared in the same manner as in Example 1, except that this paint composition was used. Measurement with FT-IR was performed for this test piece to ascertain that an isocyanate group does not exist.

[Example 6]

A paint composition having a non-volatile component content of 50% was prepared by adding 30.4 parts of Duranate E402-100, 0.015 parts of dibutyltin dilaurate KS-1260 as a urethane-curing catalyst, and 30.4 parts of DMF to 100 parts of the 50% solution of HPU-F, obtained in Production Example 11, and stirring a resultant mixture at 25°C for 5 minutes until it became uniform. A test piece was prepared in the same manner as in Example 1, except that this paint composition was used. Measurement with FT-IR was performed for this test piece to ascertain that an isocyanate group does not exist.

[Example 7]

A paint composition having a non-volatile component content of 50% was prepared in the same manner as in Example 1, except that the amount of Duranate E402-100 used as a curing agent in Example 1 was changed to 10.1 parts, and the amount of DMF was changed to 10.1 parts. A test piece was prepared in the same manner as in Example 1, except that this paint composition was used. Measurement with FT-IR was performed for this test piece to ascertain that an isocyanate group does not exist.

[Example 8]

A paint composition having a non-volatile component content of 50% was prepared in the same manner as in Example 1, except that the amount of Duranate E402-100 used as a curing agent in Example 1 was changed to 55.8 parts, and the amount of DMF was changed to 55.8 parts. A test piece was prepared in the same manner as in Example 1, except that this paint composition was used. Measurement with FT-IR was performed for this test piece to check an isocyanate group, but the isocyanate group had not been reacted completely. Thus, the reaction was further performed at 80°C for 30 minutes, and as a result, it was ascertained the isocyanate group does not exist.

[Example 9]

A paint composition having a non-volatile component content of 50% was prepared in the same manner as in Example 1, except that Duranate E402-100 used as a curing agent in Example 1 was changed to 11.8 parts of Duranate 24A-100 (NCO%=23.5%, manufactured by Asahi Kasei Corp), and the amount of DMF was changed to 11.8 parts. A test piece was prepared in the same manner as in Example 1, except that this paint composition was used. Measurement with FT-IR was performed for this test piece to ascertain that an isocyanate group does not exist.

[Example 10]

A paint composition having a non-volatile component content of 50% was prepared in the same manner as in Example 1, except that Duranate E402-100 used as a curing agent in Example 1 was changed to 17.5 parts of Duranate D201 (NCO%=15.8%, manufactured by Asahi Kasei Corp), and the amount of DMF was changed to 17.5 parts. A test piece was prepared in the same manner as in Example 1, except that this paint composition was used. Measurement with FT-IR was performed for this test piece to ascertain that an isocyanate group does not exist.

[Example 11]

A paint composition having a non-volatile component content of 50% was prepared in the same manner as in Example 1, except that dibutyltin dilaurate KS-1260 used in Example 1 was not added. A test piece was prepared in the same manner as in Example 1, except that this paint composition was used. Measurement with FT-IR was performed for this test piece to check an isocyanate group, but the isocyanate group had not been reacted completely. Thus, the reaction was further performed at 80°C for 30 minutes, so that it was ascertained the isocyanate group does not exist.

[Comparative Example 1]

A paint composition having a non-volatile component content of 50% was prepared by adding 39.1 parts of Duranate E402-100 as a curing agent, 0.015 parts of dibutyltin dilaurate KS-1260 as a urethane-curing catalyst, and 39.1 parts of DMF to 100 parts of the 50% solution of the polysiloxane-modified polyhydroxyurethane resin HPU-G for Comparative Example, obtained in Production Example 12, and stirring a resultant mixture at 25°C for 5 minutes until it became uniform. A test piece was prepared in the same manner as in Example 1, except that this paint composition was used. Measurement with FT-IR was performed for this test piece to ascertain that an isocyanate group does not exist.

[Comparative Example 2]

A paint composition having a non-volatile component content of 50% was prepared in the same manner as in Example 1, except that Duranate E402-100 in Example 1 was changed to 5.6 parts of hexamethylene diisocyanate (NCO%=49.9%), and the amount of DMF was changed to 5.6 parts. A test piece was prepared in the same manner as in Example 1, except that this paint composition was used. Measurement with FT-IR was performed for this test piece to ascertain that an isocyanate group does not exist.

[Comparative Example 3]

A paint composition having a non-volatile component content of 50% was prepared by adding 55.9 parts of Duranate E402-100 as a curing agent, 0.015 parts of dibutyltin dilaurate KS-1260 as a urethane-curing catalyst, and 55.9 parts of DMF to 100 parts of the 50% solution of HPU-H: which was obtained in Production Example 13; which is a polyhydroxyurethane resin for Comparative Example; which has a polysiloxane content in the resin of 0.0% (polysiloxane is not contained); and which does not correspond to the resin that is used in the present invention, and stirring a resultant mixture at 25°C for 5 minutes until it became uniform. A test piece was prepared in the same manner as in Example 1, except that this paint composition was used. Measurement with FT-IR was performed for this test piece to ascertain that an isocyanate group does not exist.

[Reference Example 1]

A paint composition having a non-volatile component content of 50% was prepared in the same manner as in Example 1, except that the amount of Duranate E402-100 in Example 1 was changed to 5.1 parts, and the amount of DMF was changed to 5.1 parts. A test piece was prepared in the same manner as in Example 1, except that this paint composition was used. Measurement with FT-IR was performed for this test piece to ascertain that an isocyanate group does not exist.

[Reference Example 2]

A paint composition having a non-volatile component content of 50% was prepared in the same manner as in Example 1, except that the amount of Duranate E402-100 in Example 1 was changed to 65.9 parts, and the amount of DMF was changed to 65.9 parts. A test piece was prepared in the same manner as in Example 1, except that this paint composition was used. Measurement with FT-IR was performed for this test piece to check an isocyanate group, but the isocyanate group had not been reacted completely. Thus, the reaction was further performed at 80°C for 24 hours, but the isocyanate group had not yet completely reacted.

[Evaluations]

The following tests were conducted for each test piece obtained above to evaluate the test piece according to the criteria described below. Results obtained were shown together in Table 2.

<Transparency>

The haze value (Ha) of each test piece including the substrate was measured with Haze meter HGM-2DP (Suga Test Instruments Co., Ltd.). The haze value (H) of each polyhydroxyurethane paint film was calculated from the following equation assuming that the haze value of PET having a thickness of 100 μm is (Hb=1.9). Results obtained by the following four-grade evaluation are shown together in Table 2.

$$H = Ha - Hb$$

(Evaluation Criteria)

A: H is less than 2.0%
B: H is 2.0% or more to less than 5.0%
C: H is 5.0% or more to less than 10.0%
D: H is 10.0% or more

<Self-repairability>

Steel wool #0000 was moved back and forth ten times with a load of 250g at 25°C on the surface of the paint film of each test piece, and the self-repairability of the paint film after 10 minutes was observed visually and evaluated. Obtained results are shown together in Table 2.

(Evaluation Criteria)

A: There is no scratch at all
B: There are 1 to 3 scratches
C: There are 4 to 10 scratches
D: There are more than 10 scratches

<Adhesiveness Test>

Cut lines were formed with a cutter on the surface of the paint film of each test piece in such a way as to reach the substrate to make 100 squares of 1 mm × 1 mm. A cellophane tape was pasted to the surface of the paint film of each test piece in such a way that bubbles were not contained between the surface and the tape. The state of the paint film peeled after quickly peeling the cellophane tape was evaluated using the number of squares where the paint film was not peeled. Obtained results are shown together in Table 2.

(Evaluation Criteria)

A: The number of squares where the paint film is not peeled is 100/100
B: The number of squares where the paint film is not peeled is 99/100 to 90/100
C: The number of squares where the paint film is not peeled is 89/100 to 70/100
D: The number of squares where the paint film is not peeled is 69/100 or less

<Sliding Property of Surface>

A sliding property of the surface of each paint film was tested by the method described below and evaluated according to the criteria described below. The coefficient of static friction of the surface of the paint film of each test piece was measured five times at 25°C with a static friction tester (TriboGear Muse TYPE 94i-II, manufactured by SHINTO Scientific Co., Ltd.) in which steel wool #0000 was fixed to an element to calculate the average. Obtained results are shown together in Table 2. When this measured value is smaller, it indicates that the paint film is excellent in the surface sliding property.

<Processability (Curability)>

Each paint composition of Examples, Comparative Examples, and Reference Examples was applied on PET having a thickness of 100 μm in such a way that the dried film thickness was 15 μm, and the applied paint composition was dried with a drying machine at 100°C for 5 minutes. Thereafter, reaction was performed with a drying machine at 80°C, and a resultant product was subjected to FT-IR measurement. The processability (curability) was evaluated by measuring the time (curing time) until the isocyanate group disappeared. Obtained results are shown together in Table 2.

(Evaluation Criteria)

A: 80°C/30 minutes or shorter
B: 80°C/30 minutes to 80°C/60 minutes or shorter
C: 80°C/60 minutes to 80°C/24 hours or shorter
D: The reaction is not completed at 80°C/24 hours

<Degree of Elongation>

A test piece of each resin to be used for measuring a strength property was prepared by a method in accordance with JIS K7127. The degree of elongation of the test piece prepared above was measured using a tensile tester (model name "Autograph AGS-100A," manufactured by Shimadzu Corporation) under a condition of a tensile speed of 100 mm/min and a temperature condition of 25°C and evaluated using the measurement result. Obtained results are shown

together in Table 2.

(Evaluation Criteria)

A: 150% or more
B: 100% to less than 150%
C: 50% to less than 100%
D: Less than 50%

<Organic Solvent Resistance>

One drop of MEK was dropped with a spuit onto each test piece prepared using PET, and a place where MEK was dropped was rubbed back and forth 5 times with a swab after 1 minute to observe a change in the surface visually. Obtained results are shown together in Table 2.

(Evaluation Criteria)

A: There is no change at all
B: There is a trace of the test slightly
C: A change has occurred clearly

Table 2-1: Compositions and evaluation results of paint compositions of Examples

| | Examples | | | | | | | | | | |
|---|---|---|---|---|---|---|---|---|---|---|---|
| | 1 | 2 | 3 | 4 | 5 | 6 | 7 | 8 | 9 | 10 | 11 |
| NCO/OH Ratio | 0.6 | 0.6 | 0.6 | 0.6 | 0.6 | 0.6 | 0.2 | 1.1 | 0.6 | 0.6 | 0.6 |
| HPU-A | 100 | | | | | | 100 | 100 | 100 | 100 | 100 |
| HPU-B | | 100 | | | | | | | | | |
| HPU-C | | | 100 | | | | | | | | |
| HPU-D | | | | 100 | | | | | | | |
| HPU-E | | | | | 100 | | | | | | |
| HPU-F | | | | | | 100 | | | | | |
| E402-100 | 30.4 | 25.2 | 35.5 | 30.4 | 35.4 | 30.4 | 10.1 | 55.8 | | | 30.4 |
| 24A-100 | | | | | | | | | 11.8 | | |
| D201 | | | | | | | | | | 17.5 | |
| DMF | 30.4 | 25.2 | 35.5 | 30.4 | 35.4 | 30.4 | 10.1 | 55.8 | 11.8 | 17.5 | 30.4 |
| KS-1260 | 0.015 | 0.015 | 0.015 | 0.015 | 0.015 | 0.015 | 0.015 | 0.015 | 0.015 | 0.015 | |
| • E402-100: Adduct product, isocyanate content by percentage % = 9.1<br>• 24A-100: Biuret, isocyanate content by percentage % = 23.5<br>• D201: Bi-functional type, isocyanate content by percentage % = 15.8 | | | | | | | | | | | |

Table 2-1 (cont'd): Compositions and evaluation results of paint compositions of Examples

| | Examples | | | | | | | | | | |
|---|---|---|---|---|---|---|---|---|---|---|---|
| | 1 | 2 | 3 | 4 | 5 | 6 | 7 | 8 | 9 | 10 | 11 |
| 20% Modulus of crosslinked paint film | 4.2 | 2.2 | 4.8 | 3.3 | 4.2 | 4.0 | 3.5 | 4.3 | 9.5 | 7.5 | 3.9 |
| Siloxane chain content by percentage in film | 0.93 | 1.00 | 0.88 | 0.93 | 0.88 | 1.87 | 1.25 | 0.71 | 1.21 | 1.11 | 0.93 |
| Transparency | A | A | A | A | A | B | A | A | A | A | A |
| Self-repairability | A | A | A | A | A | A | B | A | B | A | A |
| Adhesiveness | A | A | A | A | A | A | A | A | A | A | A |
| Degree of elongation (Degree of elongation %) | A (177) | A (248) | A (165) | A (220) | A (181) | A (163) | A (231) | B (133) | B (105) | A (192) | A (171) |
| Organic sol-vent resis-tance | A | A | A | A | A | A | B | A | A | B | B |
| Processability | A | A | A | A | A | A | A | B | A | A | B |
| Surface sliding property (μs) | 0.410 | 0.462 | 0.511 | 0.506 | 0.557 | 0.351 | 0.388 | 0.604 | 0.389 | 0.405 | 0.428 |

Table 2-2: Compositions and evaluation results of paint compositions of Comparative Examples

| | Comparative Example 1 | Comparative Example 2 | Comparative Example 3 | Reference Example 1 | Reference Example 2 |
|---|---|---|---|---|---|
| NCO/OH Ratio | 0.6 | 0.6 | 1.1 | 0.1 | 1.3 |
| HPU-A | | 100 | | 100 | 100 |
| HPU-G | 100 | | | | |
| HPU-H | | | 100 | | |
| E402-100 | 39.1 | | 55.9 | 5.1 | 65.9 |
| HDI | | 5.6 | | | |
| DMF | 39.1 | 5.6 | 55.9 | 5.1 | 65.9 |
| KS-1260 | 0.015 | 0.015 | 0.015 | 0.015 | 0.015 |
| 20% Modulus of crosslinked paint film | 15.9 | 12.8 | 7.2 | 3.4 | 4.5 |
| Siloxane chain content by percentage in film | 0.84 | 1.35 | Not contained | 1.36 | 0.65 |
| Transparency | A | A | A | A | A |
| Self-repairability | D | D | B | B | B |
| Adhesiveness | B | B | A | B | A |
| Degree of elongation (Degree of elongation %) | D (48) | C (85) | B (137) | A (330) | B (120) |

(continued)

| | Comparative Example 1 | Comparative Example 2 | Comparative Example 3 | Reference Example 1 | Reference Example 2 |
|---|---|---|---|---|---|
| Organic solvent resistance | A | A | A | D | A |
| Processability | A | A | B | A | D |
| Surface sliding property (μs) | 0.321 | 0.303 | 1.308 | 0.348 | 0.714 |
| ▪ E402-100: Adduct product, isocyanate content by percentage % = 9.1<br>▪ HDI: Hexamethylene diisocyanate, having two isocyanates in the molecule | | | | | |

## Claims

1. A paint composition that forms a self-repairable, polysiloxane-modified polyhydroxyurethane-crosslinked, coating film, the paint composition comprising:

   a polysiloxane-modified polyhydroxyurethane resin; and
   as a curing agent, a polyisocyanate compound comprising two or more isocyanate groups in a molecule, wherein the polysiloxane-modified polyhydroxyurethane resin has repeating units represented by the following formula (1), wherein a crosslinked coating film formed with the polysiloxane-modified polyhydroxyurethane resin has a 20% modulus at 25°C of 10 MPa or less, measured according to the method identified in the specification:

   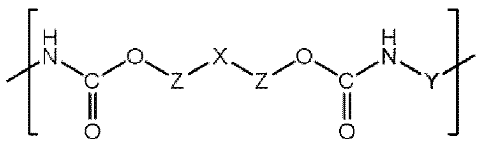

   Formula (1)

   wherein

   X represents a direct bond, or a C1-30 aliphatic hydrocarbon group, a C4-40 alicyclic hydrocarbon group, a C6-40 aromatic hydrocarbon group, or a Si1-300 dimethyl siloxane group, and these groups optionally have, in a structure thereof, any bond selected from the group consisting of an ether bond, an amino bond, a sulfonyl bond, an ester bond, and a urethane bond, or a hydroxy group, a halogen atom, or a polyalkylene glycol chain having a number of repeating units of 1 to 30 and containing C2-6 alkylene;
   Y represents a C1-15 aliphatic hydrocarbon group, a C4-15 alicyclic hydrocarbon group, or a C6-15 aromatic hydrocarbon group, and these groups optionally have, in a structure thereof, an ether bond or a sulfonyl bond, or a hydroxy group or a halogen atom; and
   each of Z independently
   represents at least any one of structures selected from the group consisting of the following formulas (2) to (5), and two or more structures selected from the group consisting of these formulas (2) to (5) are optionally mixed in the repeating units and between the repeating units:

   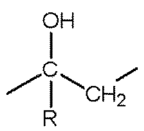

   Formula (2)

   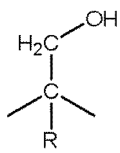

   Formula (3)

   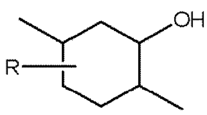

   Formula (4)

   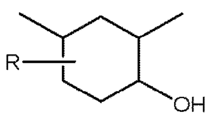

   Formula (5)

   wherein

R represents a hydrogen atom or a methyl group; and, irrespective of whatever formula is selected, an uncombined bond on the right side forms a chemical bond with an oxygen atom, and an uncombined bond on the left side forms a chemical bond with X or forms a chemical bond with an uncombined bond on the left side of the other Z when X is a direct bond, provided that the polysiloxane-modified polyhydroxyurethane resin has at least a repeating unit of formula (1) wherein X represents a Si1-300 dimethyl siloxane group.

2. The paint composition according to claim 1, wherein the polysiloxane-modified polyhydroxyurethane resin is a synthetic of a polysiloxane compound having at least two cyclic carbonate groups, the polysiloxane compound represented by the following formula (6), and a component comprising a diamine:

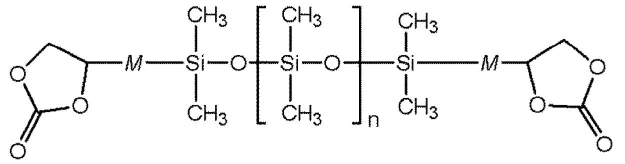
Formula (6)

wherein M represents a C1-30 aliphatic hydrocarbon group, a C4-40 alicyclic hydrocarbon group, or a C6-40 aromatic hydrocarbon group, and these groups optionally have, in a structure thereof, any bond selected from the group consisting of an ether bond, an amino bond, a sulfonyl bond, an ester bond, and a urethane bond, or a hydroxy group, a halogen atom, or a polyalkylene glycol chain having a number of repeating units of 1 to 30 and containing C2-6 alkylene; and n represents a number of 1 to 300.

3. The paint composition according to claim 1 or 2, wherein the polysiloxane-modified polyhydroxyurethane resin has a polysiloxane content of 0.1 to 10.0% on a mass basis.

4. The paint composition according to any one of claims 1 to 3, wherein part or the whole of a urethane bond contained in the polysiloxane-modified polyhydroxyurethane resin is an addition reaction product of a five-membered cyclic carbonate group, being a reaction product of an epoxy group and carbon dioxide, and an amino group, and a ratio of an -O-CO- structure in the addition reaction product, derived from the carbon dioxide, in the polysiloxane-modified polyhydroxyurethane resin is 1 to 20% by mass.

5. The paint composition according to any one of claims 1 to 4, wherein the repeating units represented by the formula (1) comprise a unit such that X represents a chemical structure represented by the following formula (7):

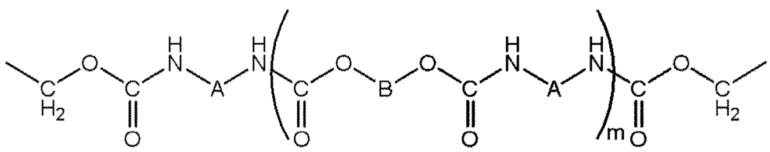
Formula (7)

wherein A represents a chemical structure derived from a polyisocyanate; B represents a chemical formula derived from a polyol; and m represents any one of 1 to 6.

6. The paint composition according to any one of claims 1 to 5, wherein the polysiloxane-modified polyhydroxyurethane resin has a 20% modulus at 25°C of 0.3 to 9.5 MPa, measured according to the method identified in the specification.

7. The paint composition according to any one of claims 1 to 6, wherein the polyisocyanate compound has an NCO content of 3 to 35% in terms of a solid content.

8. The paint composition according to any one of claims 1 to 7, wherein a ratio (NCO/OH) of a number of moles of an isocyanate group (NCO) of the polyisocyanate compound to a number of moles of a hydroxy group (OH) of the polysiloxane-modified polyhydroxyurethane resin is 0.2 to 1.1.

9. The paint composition according to any one of claims 1 to 8, further comprising a urethane-curing catalyst.

10. A paint film obtained by curing the paint composition according to any one of claims 1 to 9 having been applied.

## Patentansprüche

1. Lackzusammensetzung, die einen selbstheilenden, polysiloxanmodifizierten, vernetzten Polyhydroxyurethan-Beschichtungsfilm bildet, wobei die Lackzusammensetzung Folgendes umfasst:

   ein polysiloxanmodifiziertes Polyhydroxyurethanharz; und als Härter eine Polyisocyanatverbindung mit zwei oder mehr Isocyanatgruppen pro Molekül, wobei
   das polysiloxanmodifizierte Polyhydroxyurethanharz Wiederholungseinheiten der folgenden Formel (1) aufweist und ein mit dem polysiloxanmodifizierten Polyhydroxyurethanharz gebildeter vernetzter Beschichtungsfilm einen 20%-Modul bei 25 °C von 10 MPa oder weniger aufweist, gemessen nach dem in der Beschreibung offenbarten Verfahren:

   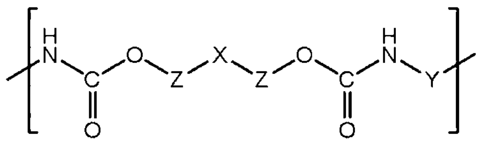
   Formula (1)

   wobei

   X für eine direkte Bindung oder eine aliphatische C1-30-Kohlenwasserstoffgruppe, eine alicyclische C4-40-Kohlenwasserstoffgruppe, eine aromatische C6-40-Kohlenwasserstoffgruppe oder eine Si1-300-Dimethylsiloxangruppe steht, wobei diese Gruppen optional in ihrer Struktur eine beliebige Bindung aus der Gruppe bestehend aus Etherbindung, Aminobindung, Sulfonylbindung, Esterbindung und Urethanbindung oder eine Hydroxygruppe, ein Halogenatom oder eine Polyalkylenglykolkette mit 1 bis 30 Wiederholungseinheiten und C2-6-Alkylengruppen aufweisen können;
   Y für eine aliphatische C1-15-Kohlenwasserstoffgruppe, eine alicyclische C4-15-Kohlenwasserstoffgruppe oder eine aromatische C6-15-Kohlenwasserstoffgruppe steht, wobei diese Gruppen optional in ihrer Struktur eine Etherbindung oder eine Sulfonylbindung oder eine Hydroxygruppe oder ein Halogenatom aufweisen können; und
   jedes von Z unabhängig
   mindestens für eine der Strukturen steht, die aus der Gruppe bestehend aus den folgenden Formeln (2) bis (5) ausgewählt sind, und zwei oder mehr Strukturen, die aus der Gruppe bestehend aus diesen Formeln (2) bis (5) ausgewählt sind, werden optional in den Wiederholungseinheiten und zwischen den Wiederholungseinheiten gemischt:

   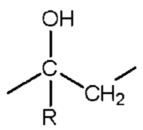
   Formula (2)
   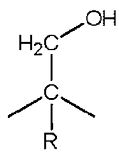
   Formula (3)

   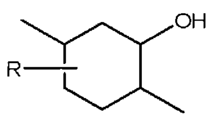
   Formula (4)
   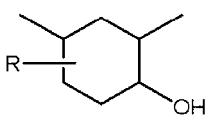
   Formula (5)

   wobei

   R für ein Wasserstoffatom oder eine Methylgruppe steht; wobei unabhängig von der gewählten Formel eine ungebundene Bindung auf der rechten Seite eine chemische Bindung mit einem Sauerstoffatom, und eine ungebundene Bindung auf der linken Seite eine chemische Bindung mit X oder eine chemische Bindung mit einer ungebundenen Bindung auf der linken Seite des anderen Z bildet, wenn X eine direkte Bindung ist, vorausgesetzt, dass das polysiloxanmodifizierte Polyhydroxyurethanharz mindestens eine Wiederholungseinheit der Formel (1) aufweist, wobei X eine Si1-300-Dimethylsiloxangruppe darstellt.

2. Die Lackzusammensetzung nach Anspruch 1, wobei das Polysiloxanmodifizierte Polyhydroxyurethanharz ein synthetisches Polysiloxan ist, das mindestens zwei cyclische Carbonatgruppen aufweist, wobei das Polysiloxan durch die folgende Formel (6) dargestellt wird, und eine Komponente enthält, die ein Diamin umfasst:

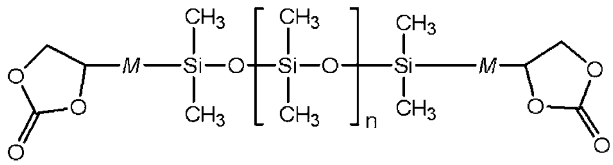

Formula (6)

wobei M für eine aliphatische C1-30-Kohlenwasserstoffgruppe, eine alicyclische C4-40-Kohlenwasserstoffgruppe oder eine aromatische C6-40-Kohlenwasserstoffgruppe steht und diese Gruppen optional in ihrer Struktur eine beliebige Bindung aus der Gruppe, bestehend aus einer Etherbindung, einer Aminobindung, einer Sulfonylbindung, einer Esterbindung und einer Urethanbindung oder eine Hydroxygruppe, ein Halogenatom oder eine Polyalkylenglykolkette mit einer Anzahl von Wiederholungseinheiten von 1 bis 30 und die C2-6-Alkylen enthält, aufweisen; und n eine Zahl von 1 bis 300 darstellt.

3. Die Lackzusammensetzung nach Anspruch 1 oder 2, wobei das polysiloxanmodifizierte Polyhydroxyurethanharz einen Polysiloxangehalt von 0,1 bis 10,0 Masseprozent aufweist.

4. Die Lackzusammensetzung nach einem der Ansprüche 1 bis 3, wobei die Urethanbindung im polysiloxanmodifizierten Polyhydroxyurethanharz teilweise oder vollständig ein Additionsreaktionsprodukt einer fünfgliedrigen cyclischen Carbonatgruppe ist, die wiederum ein Reaktionsprodukt einer Epoxidgruppe und Kohlendioxid sowie einer Aminogruppe ist, und wobei der Anteil der -O-CO--Struktur im Additionsreaktionsprodukt, die vom Kohlendioxid stammt, im polysiloxanmodifizierten Polyhydroxyurethanharz 1 bis 20 Masseprozent beträgt.

5. Die Lackzusammensetzung nach einem der Ansprüche 1 bis 4, wobei die durch die Formel (1) dargestellten Wiederholungseinheiten eine Einheit umfassen, so dass X eine chemische Struktur der folgenden Formel (7) darstellt:

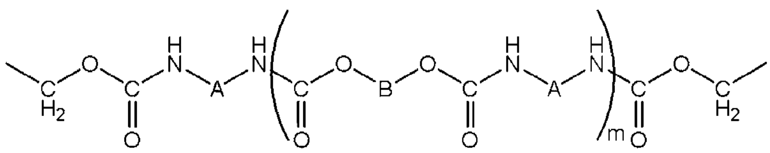

Formula (7)

wobei A eine von einem Polyisocyanat abgeleitete chemische Struktur darstellt; B eine von einem Polyol abgeleitete chemische Formel darstellt; und m 1 bis 6 darstellt.

6. Die Lackzusammensetzung nach einem der Ansprüche 1 bis 5, wobei das polysiloxanmodifizierte Polyhydroxyurethanharz einen 20%-Modul bei 25 °C von 0,3 bis 9,5 MPa aufweist, gemessen nach dem in der Beschreibung offenbarten Verfahren.

7. Die Lackzusammensetzung nach einem der Ansprüche 1 bis 6, wobei die Polyisocyanatverbindung einen NCO-Gehalt von 3 bis 35 % bezogen auf den Feststoffgehalt aufweist.

8. Die Lackzusammensetzung nach einem der Ansprüche 1 bis 7, wobei das Verhältnis (NCO/OH) der Stoffmenge einer Isocyanatgruppe (NCO) der Polyisocyanatverbindung zur Stoffmenge einer Hydroxygruppe (OH) des polysiloxanmodifizierten Polyhydroxyurethanharzes 0,2 bis 1,1 beträgt.

9. Die Lackzusammensetzung nach einem der Ansprüche 1 bis 8, ferner umfassend einen Urethan-Härtungskatalysator.

10. Ein Lackfilm, der durch Aushärten einer aufgetragenen Lackzusammensetzung nach einem der Ansprüche 1 bis 9 erhalten wird.

## Revendications

1. Composition de peinture qui forme un film de revêtement autoréparable réticulé par polyhydroxyuréthane modifié par polysiloxane, la composition de peinture comprenant :

une résine de polyhydroxyuréthane modifiée par polysiloxane ; et
en tant qu'agent de durcissement, un composé polyisocyanate comprenant deux groupes isocyanate ou plus dans une molécule, dans laquelle
la résine de polyhydroxyuréthane modifiée par polysiloxane présente des motifs répétés représentés par la formule (1) suivante, dans laquelle un film de revêtement réticulé formé avec la résine de polyhydroxyuréthane modifiée par polysiloxane présente un module à 20 % à 25 °C de 10 MPa ou moins, mesuré selon la méthode identifiée dans la description :

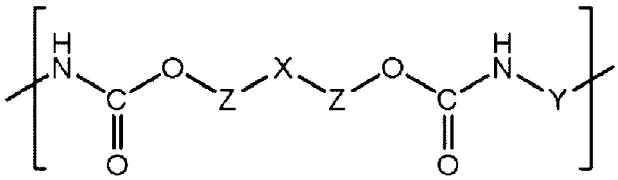
Formula (1)

dans laquelle

X représente une liaison directe, ou un groupe hydrocarboné aliphatique en C1-30, un groupe hydrocarboné alicyclique en C4-40, un groupe hydrocarboné aromatique en C6-40, ou un groupe diméthyl siloxane en Si1-300, et ces groupes ont optionnellement, dans une de leurs structures, une liaison sélectionnée parmi le groupe consistant en une liaison éther, une liaison amino, une liaison sulfonyle, une liaison ester et une liaison uréthane, ou un groupe hydroxy, un atome d'halogène, ou une chaîne polyalkylène glycol ayant un nombre de motifs répétés de 1 à 30 et contenant un alkylène en C2-6 ;
Y représente un groupe hydrocarboné aliphatique en C1-15, un groupe hydrocarboné alicyclique en C4-15, ou un groupe hydrocarboné aromatique en C6-15, et ces groupes ont optionnellement, dans une de leurs structures, une liaison éther ou une liaison sulfonyle, ou un groupe hydroxy ou un atome d'halogène ; et
chacun de Z indépendamment
représente au moins l'une des structures sélectionnées parmi le groupe consistant en les formules (2) à (5) suivantes, et deux structures ou plus sélectionnées parmi le groupe consistant en ces formules (2) à (5) sont optionnellement mêlées dans les motifs répétés et entre les motifs répétés :

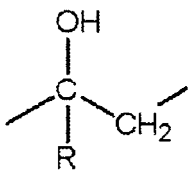
Formula (2)

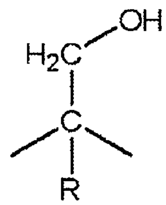
Formula (3)

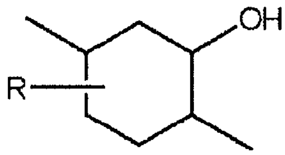
Formula (4)

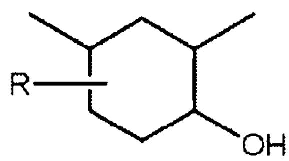
Formula (5)

dans laquelle

R représente un atome d'hydrogène ou un groupe méthyle ; et,
quelle que soit la formule sélectionnée, une liaison non combinée sur le côté droit forme une liaison chimique avec un atome d'oxygène, et une liaison non combinée sur le côté gauche forme une liaison chimique avec X ou forme une liaison chimique avec une liaison non combinée sur le côté gauche de l'autre Z lorsque X est une liaison directe, à condition que la résine de polyhydroxyuréthane modifiée par polysiloxane ait au moins un motif répété de formule (1) dans laquelle X représente un groupe diméthyl siloxane en Si1 -300.

**2.** Composition de peinture selon la revendication 1, dans laquelle la résine de polyhydroxyuréthane modifiée par polysiloxane est un synthétique d'un composé polysiloxane ayant au moins deux groupes carbonate cyclique, le composé polysiloxane représenté par la formule (6) suivante, et d'un composant comprenant une diamine :

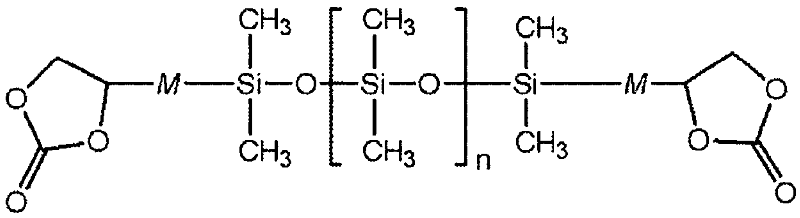

Formula (6)

dans laquelle M représente un groupe hydrocarboné aliphatique en C1-30, un groupe hydrocarboné alicyclique en C4-40, ou un groupe hydrocarboné aromatique en C6-40, et ces groupes ont optionnellement, dans une de leurs structures, une liaison sélectionnée dans le groupe consistant en une liaison éther, une liaison amino, une liaison sulfonyle, une liaison ester, et une liaison uréthane, ou un groupe hydroxy, un atome d'halogène, ou une chaîne polyalkylène glycol ayant un nombre de motifs répétés de 1 à 30 et contenant un alkylène en C2-6 ; et n représente un nombre de 1 à 300.

**3.** Composition de peinture selon la revendication 1 ou 2, dans laquelle la résine de polyhydroxyuréthane modifiée par polysiloxane a une teneur en polysiloxane de 0,1 à 10,0 % en masse.

**4.** Composition de peinture selon l'une des revendications 1 à 3, dans laquelle une partie ou la totalité d'une liaison uréthane contenue dans la résine de polyhydroxyuréthane modifiée par polysiloxane est un produit de réaction d'addition d'un groupe carbonate cyclique à cinq chaînons, qui est un produit de réaction d'un groupe époxy et de dioxyde de carbone, et d'un groupe amino, et un rapport d'une structure -O-CO- dans le produit de réaction d'addition, dérivé du dioxyde de carbone, dans la résine de polyhydroxyuréthane modifiée par polysiloxane est de 1 à 20 % en masse.

**5.** Composition de peinture selon l'une des revendications 1 à 4, dans laquelle les motifs répétés représentés par la formule (1) comprennent un motif tel que X représente une structure chimique représentée par la formule (7) suivante :

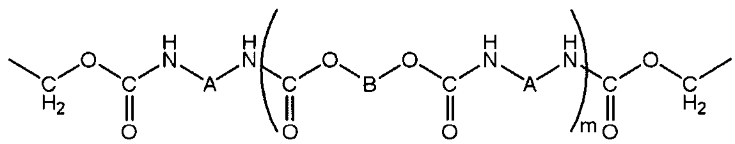

Formula (7)

dans laquelle A représente une structure chimique dérivée d'un polyisocyanate ; B représente une formule chimique dérivée d'un polyol ; et m représente l'un de 1 à 6.

**6.** Composition de, peinture selon l'une des revendications 1 à 5, dans laquelle la résine de polyhydroxyuréthane modifiée par polysiloxane a un module à 20 % à 25 °C de 0,3 à 9,5 MPa, mesuré selon la méthode identifiée dans la description.

**7.** Composition de peinture selon l'une des revendications 1 à 6, dans laquelle le composé polyisocyanate a une teneur en NCO de 3 à 35 % en ce qui concerne une teneur en matière sèche.

**8.** Composition de peinture selon l'une des revendications 1 à 7, dans laquelle un rapport (NCO/OH) d'un nombre de moles d'un groupe isocyanate (NCO) du composé polyisocyanate sur un nombre de moles d'un groupe hydroxy (OH) de la résine de polyhydroxyuréthane modifiée par polysiloxane est de 0,2 à 1,1.

**9.** Composition de peinture selon l'une des revendications 1 à 8, comprenant en outre un catalyseur de durcissement par uréthane.

**10.** Film de peinture obtenu par durcissement de la composition de peinture selon l'une des revendications 1 à 9 ayant été appliquée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5692481 B
- JP 4707013 B
- JP 2006 A
- JP 9001 A
- JP 5604329 B
- JP 2011131588 A
- JP 2011132208 A